(19) Europäisches Patentamt / European Patent Office / Office européen des brevets

(11) **EP 3 015 896 B1**

(12) **EUROPEAN PATENT SPECIFICATION**

(45) Date of publication and mention
of the grant of the patent:
**12.08.2020 Bulletin 2020/33**

(21) Application number: **14818229.8**

(22) Date of filing: **13.06.2014**

(51) Int Cl.:
*G02B 13/04* (2006.01)    *G02B 13/18* (2006.01)
*G02B 15/20* (2006.01)

(86) International application number:
**PCT/JP2014/065752**

(87) International publication number:
**WO 2014/208367 (31.12.2014 Gazette 2014/53)**

(54) **ZOOM LENS SYSTEM**

ZOOMOBJEKTIVSYSTEM

SYSTÈME D'OBJECTIF À FOCALE VARIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2013 JP 2013136070**

(43) Date of publication of application:
**04.05.2016 Bulletin 2016/18**

(73) Proprietor: **Ricoh Imaging Company, Ltd.
Tokyo 174-8639 (JP)**

(72) Inventor: **OHISHI, Takahiko
Tokyo 174-8639 (JP)**

(74) Representative: **Ablett, Graham Keith
Lewis Silkin LLP
5 Chancery Lane
Clifford's Inn
London EC4A 1BL (GB)**

(56) References cited:
**JP-A- H10 161 024      JP-A- 2006 053 437
JP-A- 2010 044 228      JP-A- 2011 107 267
JP-A- 2011 107 269      US-A1- 2006 007 559**

• **Anonymous: "Doublet (lens) - Wikipedia", , 28
February 2013 (2013-02-28), XP055660044,
Retrieved from the Internet:
URL:https://en.wikipedia.org/w/index.php?t
itle=Doublet_(lens)&oldid=541196742 [retrieved
on 2020-01-21]**

**Description**

TECHNICAL FIELD

The present invention relates to a zoom lens system that includes a standard range through to an intermediate telephoto range.

BACKGROUND ART

Conventionally, a zoom lens system having a negative lens group, a positive lens group, a negative lens group and a positive lens group (four lens groups), and a zoom lens system having a negative lens group and a positive lens group (two lens groups) have been used as zoom lens systems that include a standard range through to an intermediate telephoto range. Generally, although a zoom lens system having a negative lens group, a positive lens group, a negative lens group and a positive lens group (four lens groups) has the beneficial features of having a high freedom of design and being advantageous for correcting aberrations, since the there are a large number of lens groups (lens elements), such a zoom lens system has the disadvantage of the mechanical structure therefor becoming large and complicated; and although a zoom lens system having a negative lens group and a positive lens group (two lens groups) has the beneficial features of the mechanical structure therefor being simple and cost efficient due to the small number of lens groups (lens elements), such a zoom lens system has the disadvantage of having a low freedom of design and being disadvantageous in regard to correction of aberrations. Furthermore, if attempts are made to achieve a fast zoom lens system having a small f-number, since a zoom lens system having a negative lens group and a positive lens group (two lens groups) lacks design freedom and correction of aberrations (especially correction of coma flare) is difficult so that the optical quality thereof easily deteriorates, a zoom lens system having a negative lens group, a positive lens group, a negative lens group and a positive lens group (four lens groups), which has a high degree of design freedom, is often used.

Patent Literature 1 through 3 each disclose a zoom lens system having a negative lens group and a positive lens group (two lens groups). However, in each of these zoom lens systems, the f-number is only around 3.5 through 4, so that the brightness thereof is insufficient. Furthermore, large amounts of various aberrations such as coma, spherical aberration, astigmatism, field curvature and chromatic aberration occur, so that there is a problem with the optical quality deteriorating. Patent Literature 1 aims to collect light by providing a flare-cut diaphragm and moving the flare-cut diaphragm during zooming, however, since correction of aberrations over the entire lens system is insufficient in the first place, the flare-cut diaphragm does not function very effectively with respect to the correction of coma aberration.

CITATION LIST

PATENT LITERATURE

Patent Literature 1: Japanese Unexamined Patent Publication No. 2010-128145
Patent Literature 2: Japanese Patent No. 4,654,506
Patent Literature 3: Japanese Unexamined Patent Publication No. H05-88084

SUMMARY OF INVENTION

TECHNICAL PROBLEM

US 2006/0007559 discloses a zoom lens system having, in order from the object, a first lens group with negative power and a second lens group with positive power. Zooming is performed by varying a distance between the first lens group and the second lens group. The first lens group includes at least a negative lens and a positive lens. The second lens group includes a front lens group with positive power and a rear lens group with positive power. The front lens group includes a positive lens and a cemented lens constructed by a positive lens cemented with a negative lens. The rear lens group includes a cemented lens constructed by a negative lens cemented with a positive lens.

The present invention has been devised in view of the above-described problems and an object of the present invention is to achieve a zoom lens system having a negative lens group and a positive lens group (two lens groups) which utilizes its advantages of having a simple and low-cost mechanical structure, attains a sufficiently fast f-number that is small, and favorably corrects various aberrations such as coma, spherical aberration, astigmatism, field curvature and chromatic aberration, etc., to thereby achieve a superior optical quality.

SOLUTION TO PROBLEM

According to the present invention as defined by claim 1 there is provided a zoom lens system comprising:- a negative first lens group and a positive second lens group in that order from the object side; wherein during zooming from the short focal length extremity to the long focal length extremity, the distance between said first lens group and said second lens group decreases; wherein said second lens group comprises a positive first sub-lens group, an aperture diaphragm, and a positive second sub-lens group in that order from the object side; wherein said first sub-lens group comprises one or two positive lens elements, and a cemented lens having a positive lens element and a negative lens element; characterised in that said second sub-lens group is consisting of one or two positive lens elements, and one negative lens element which are uncemented and satisfy the following condition:-

$$0.65 < f2A/f2B < 1.0 \quad \dots \quad (1)$$

wherein f2A designates the focal length of said first sub-lens group, and f2B designates the focal length of said second sub-lens group.

In the zoom lens system of the present invention, it is desirable for the following condition (2) to be satisfied:

$$0.5 < RP/FP < 1.5 \quad \dots \quad (2)$$

wherein FP designates the combined focal length of the first lens group (G1) and the first sub-lens group (G2A) at the short focal length extremity; and wherein RP designates the focal length of the second sub-lens group (G2B) at the short focal length extremity.

It is desirable for the following condition (2') to be satisfied within the range of condition (2):

$$1.0 < RP/FP < 1.4 \quad \dots \quad (2').$$

It is desirable for the first lens group to include an aspherical surface lens element, wherein the following condition (3) is satisfied:

$$1.6 < fasp/f1 < 5.0 \quad \dots \quad (3),$$

wherein fasp designates the focal length of the aspherical surface lens element that is provided within the first lens group, and f1 designates the focal length of the first lens group.

It is desirable for the following condition (4) to be satisfied:

$$A\nu d > 52.5 \quad \dots \quad (4),$$

wherein A$\nu$d designates the Abbe number at the d-line of the aspherical surface lens element that is provided within the first lens group.

It is desirable for the following condition (5) to be satisfied:

$$-0.92 < f1/f2 < -0.8 \quad \dots \quad (5),$$

wherein f1 designates the focal length of the first lens group, and f2 designates the focal length of the second lens group.

ADVANTAGEOUS EFFECTS OF INVENTION

With the present invention, a zoom lens system having a negative lens group and a positive lens group (two lens groups) is achieved, which utilizes its advantages of having a simple and low-cost mechanical structure, attains a sufficiently fast f-number that is small, and favorably corrects various aberrations such as coma, spherical aberration, astigmatism, field curvature and chromatic aberration, etc., to thereby achieve a superior optical quality.

BRIEF DESCRIPTION OF DRAWINGS

FIG. 1 shows a lens arrangement of a first numerical embodiment of a zoom lens system, according to the present invention, at the long focal length extremity when focusing on an object at infinity;
FIG. 2 shows various aberrations that occurred in the lens arrangement of FIG. 1;
FIG. 3 shows lateral aberrations that occurred in the lens arrangement of FIG. 1;
FIG. 4 shows the lens arrangement of the first numerical embodiment at the short focal length extremity when focusing on an object at infinity;
FIG. 5 shows various aberrations that occurred in the lens arrangement of FIG. 4;
FIG. 6 shows lateral aberrations that occurred in the lens arrangement of FIG. 4;
FIG. 7 shows a lens arrangement of a second numerical embodiment of a zoom lens system, according to the present invention, at the long focal length extremity when focusing on an object at infinity;
FIG. 8 shows various aberrations that occurred in the lens arrangement of FIG. 7;
FIG. 9 shows lateral aberrations that occurred in the lens arrangement of FIG. 7;
FIG. 10 shows the lens arrangement of the second numerical embodiment at the short focal length extremity when focusing on an object at infinity;
FIG. 11 shows various aberrations that occurred in the lens arrangement of FIG. 10;
FIG. 12 shows lateral aberrations that occurred in the lens arrangement of FIG. 10;
FIG. 13 shows a lens arrangement of a third numerical embodiment of a zoom lens system, according to the present invention, at the long focal length extremity when focusing on an object at infinity;
FIG. 14 shows various aberrations that occurred in the lens arrangement of FIG. 13;
FIG. 15 shows lateral aberrations that occurred in the lens arrangement of FIG. 13;
FIG. 16 shows the lens arrangement of the third numerical embodiment at the short focal length extremity when focusing on an object at infinity;
FIG. 17 shows various aberrations that occurred in the lens arrangement of FIG. 16;
FIG. 18 shows lateral aberrations that occurred in the lens arrangement of FIG. 16;
FIG. 19 shows a lens arrangement of a fourth numerical embodiment of a zoom lens system, according to the present invention, at the long focal length extremity when focusing on an object at infinity;
FIG. 20 shows various aberrations that occurred in the lens arrangement of FIG. 19;
FIG. 21 shows lateral aberrations that occurred in the lens arrangement of FIG. 19;
FIG. 22 shows the lens arrangement of the fourth numerical embodiment at the short focal length extremity when focusing on an object at infinity;
FIG. 23 shows various aberrations that occurred in the lens arrangement of FIG. 22;
FIG. 24 shows lateral aberrations that occurred in the lens arrangement of FIG. 22;
FIG. 25 shows a lens arrangement of a fifth numerical embodiment of a zoom lens system, according to the present invention, at the long focal length extremity when focusing on an object at infinity;
FIG. 26 shows various aberrations that occurred in the lens arrangement of FIG. 25;
FIG. 27 shows lateral aberrations that occurred in the lens arrangement of FIG. 25;
FIG. 28 shows the lens arrangement of the fifth numerical embodiment at the short focal length extremity when focusing on an object at infinity;
FIG. 29 shows various aberrations that occurred in the lens arrangement of FIG. 28;
FIG. 30 shows lateral aberrations that occurred in the lens arrangement of FIG. 28;
FIG. 31 shows a lens arrangement of a sixth numerical embodiment of a zoom lens system, according to the present invention, at the long focal length extremity when focusing on an object at infinity;
FIG. 32 shows various aberrations that occurred in the lens arrangement of FIG. 31;
FIG. 33 shows lateral aberrations that occurred in the lens arrangement of FIG. 31;
FIG. 34 shows the lens arrangement of the sixth numerical embodiment at the short focal length extremity when focusing on an object at infinity;
FIG. 35 shows various aberrations that occurred in the lens arrangement of FIG. 34;
FIG. 36 shows lateral aberrations that occurred in the lens arrangement of FIG. 34;
FIG. 37 shows a lens arrangement of a seventh numerical embodiment of a zoom lens system, according to the present invention, at the long focal length extremity when focusing on an object at infinity;
FIG. 38 shows various aberrations that occurred in the lens arrangement of FIG. 37;
FIG. 39 shows lateral aberrations that occurred in the lens arrangement of FIG. 37;
FIG. 40 shows the lens arrangement of the seventh numerical embodiment at the short focal length extremity when focusing on an object at infinity;

FIG. 41 shows various aberrations that occurred in the lens arrangement of FIG. 40;

FIG. 42 shows lateral aberrations that occurred in the lens arrangement of FIG. 40; and

FIG. 43 shows a zoom path of the zoom lens system according to the present invention.

## DESCRIPTION OF EMBODIMENTS

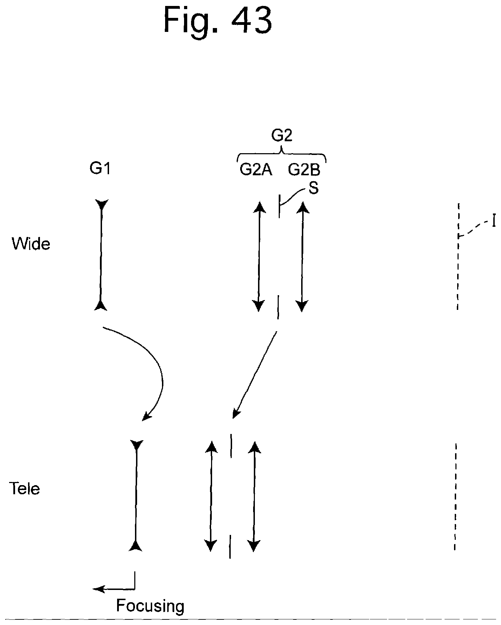

In each of the first through seventh numerical embodiments, the zoom lens system of the illustrated embodiments is configured of a negative first lens group G1 and a positive second lens group G2, in that order from the object side, as shown in the zoom path of FIG. 43. The second lens group G2 is configured of a positive first sub-lens group G2A, an aperture diaphragm S, and a positive second sub-lens group G2B, in that order from the object side. "I" designates the imaging plane.

In each of the first through seventh numerical embodiments, in the zoom lens system of the illustrated embodiments, upon zooming from the short focal length extremity (Wide) to the long focal length extremity (Tele), the first lens group G1 first moves toward the image side and thereafter moves toward the object side (U-turns), the second lens group G2 (the first sub-lens group G2A, the aperture diaphragm S and the second sub-lens group G2B) moves monotonically toward the object side, so that the distance between the first lens group G1 and the second lens group G2 decreases, as shown in the zoom path of FIG. 43. Furthermore, focusing on an object at infinity to an object at a finite distance is performed by moving (advancing) the first lens group G1 toward the object side.

In each of the first through seventh numerical embodiments, the first lens group G1 is configured of a negative lens element 11, a negative lens element 12 and a positive lens element 13, in that order from the object side. The negative lens element 12 includes an aspherical surface on the image side thereof.

In each of the first, second and fourth numerical embodiments, the first sub-lens group G2A is configured of a positive lens element 21, and a cemented lens having a positive lens element 22 and a negative lens element 23, in that order from the object side.

In each of the third and fifth through seventh numerical embodiments, the first sub-lens group G2A is configured of a positive lens element 21', a positive lens element 22', and a cemented lens having a positive lens element 23' and a negative lens element 24', in that order from the object side.

In each of the first through sixth numerical embodiments, the second sub-lens group G2B is configured of a positive lens element 25, a negative lens element 26 and a positive lens element 27, in that order from the object side.

In the seventh numerical embodiment, the second sub-lens group G2b is configured of a negative lens element 25' and a positive lens element 26', in that order from the object side.

In a conventional and typical zoom lens system having a negative lens group and a positive lens group (two lens groups), a so-called Ernostar arrangement, in which a convex meniscus lens element is inserted in between the front convex lens element and the concave lens element of a triplet lens arrangement, is often employed for the positive second lens group. However, there is a problem with the correction of aberrations, and especially coma flare, becoming difficult, thereby deteriorating optical quality.

Accordingly, in the zoom lens system of the present embodiment, the second lens group G2 is divided at the aperture diaphragm S into the first sub-lens group G2A on the object side and the second sub-lens group G2B on the image side, by mainly using the first sub-lens group G2A for image formation and mainly using the second sub-lens group G2B for favorably correcting coma flare, thereby achieving a superior optical quality.

Furthermore, in the zoom lens system of the present embodiment, by appropriately configuring the lens arrangement of the second lens group G2 (the first sub-lens group G2A and the second sub-lens group G2B), and appropriately setting the refractive-power balance between the first sub-lens group G2A and the second sub-lens group G2B, a sufficiently fast small f-number can be obtained while achieving a superior optical quality by favorably correcting various aberrations such as coma, spherical aberration, astigmatism, field curvature and chromatic aberration, etc.

In each of the first through seventh numerical embodiments, the first sub-lens group G2A is configured of one or two positive lens elements (the positive lens element 21; or the positive lens element 21' and the positive lens element 22'), and a cemented lens having a positive lens element and a negative lens element (the cemented lens having the positive lens element 22 and the negative lens element 23; or the cemented lens having the positive lens element 23' and the negative lens element 24').

In each of the first through seventh numerical embodiments, the second sub-lens group G2B is configured of one or two positive lens elements (the positive lens element 25 and the positive lens element 27; or the positive lens element 26'), and one negative lens element (the negative lens element 26 or the negative lens element 25').

By providing a negative lens element (the negative lens element 26 or the negative lens element 25'), which generates negative spherical aberration, within the second sub-lens group G2B, even if a sufficiently fast small f-number is obtained, spherical aberrations can still be favorably corrected.

Furthermore, by providing a cemented lens having a positive lens element and a negative lens element (the cemented lens having the positive lens element 22 and the negative lens element 23; or the cemented lens having the positive lens element 23' and the negative lens element 24') at a position immediately in front of the aperture diaphragm S which is provided within the first sub-lens group G2A, chromatic aberration can be favorably corrected.

The first lens group G1 is configured of a plurality of lens elements, including at least one positive lens element (the positive lens element 13 in the present embodiments), in order to attain a negative refractive power while suppressing distortion.

In order to more effectively correct distortion, a positive lens element should be provided closest to the object side within the first lens group G1.

However, even in a conventional zoom lens system in which the f-number is large and has an insufficient speed, since the maximum diameter of the positive lens element that is positioned closest to the object side is too large, there is an extremely difficult technical problem in attaining a small and sufficiently fast f-number while miniaturizing the positive lens element, and in turn the entire lens system.

In order to solve this technical problem, the zoom lens system of the present embodiments provides an aspherical lens element (the negative lens element 12 in the present embodiments) within the first lens group G1. With this aspherical lens element, distortion can be favorably corrected, and by increasing the selection of optical materials for the aspherical surface, the refractive power distribution within the first lens group G1 can be appropriately determined, so that various aberrations such as chromatic aberration can be effectively corrected.

The first lens group G1 constitutes a focusing lens group which moves toward the object side during focusing on an object at infinity to an object at a close-up distance. By including at least one positive lens element (the positive lens element 13 in the present embodiments) in the first lens group G1, large fluctuations in spherical aberration, distortion and coma can be suppressed during focusing.

Condition (1) specifies the ratio of the focal length of the first sub-lens group G2A to the focal length of the second sub-lens group G2B. By satisfying condition (1), coma and spherical aberration can be favorably corrected, so that a superior optical quality can be achieved.

If the upper limit of condition (1) is exceeded, the light rays bend by a large amount in front of the aperture diaphragm S, so that correction of coma becomes insufficient.

If the lower limit of condition (1) is exceeded, the positive refractive power of the second sub-lens group G2B, at the image side of the aperture diaphragm S, becomes too weak, so that the correction of spherical aberration becomes insufficient.

Condition (2) specifies the ratio of the focal length of the lens groups on the object side of the aperture diaphragm S at the short focal length extremity (the combined focal length of the first lens group G1 and the first sub-lens group G2A at the short focal length extremity), to the focal length of the lens groups on the image side of the aperture diaphragm S at the short focal length extremity (the focal length of the second sub-lens group G2B at the short focal length extremity). By satisfying condition (2), the amount of aberrations can be suppressed over the entire zooming range from the short focal length extremity to the long focal length extremity, so that a superior optical quality can be achieved. This is particularly effective for correction of astigmatism, so that a favorable blur effect and point image can be achieved over the entire zooming range from the short focal length extremity to the long focal length extremity.

If the upper limit of condition (2) is exceeded, since the refractive power of the optical system on the object side is strong, correction of distortion, in addition to astigmatism, becomes insufficient.

If the lower limit of condition (2) is exceeded, since the refractive power of the optical system on the image side is strong, an excessive amount of spherical aberration occurs. Furthermore, since the light rays sharply bend behind the diaphragm, coma also occurs.

In the zoom lens system of the present embodiments, the first lens group G1 is provided with a negative lens element 12, the surface on the image side thereof being an aspherical surface. The negative lens element 12 can alternatively have an aspherical surface only on the object side thereof, or can have an aspherical surface on each side thereof. Furthermore, at least one surface on any of the other lens elements (the negative lens element 11; the positive lens element 13) provided within the first lens group G1 can be formed as an aspherical surface.

Condition (3) specifies the ratio of the focal length of the aspherical lens element (the negative lens element 12 in the present embodiments) provided within the first lens group G1 to the focal length of the first lens group G1, with the first lens group G1 configured as described above. By satisfying condition (3), and with the first lens group G1 configured with a small number of lens elements, various aberrations can be favorably corrected, thereby achieving a superior optical quality.

If the upper limit of condition (3) is exceeded, the negative refractive power of the aspherical lens element (the negative lens element 12 in the present embodiment) provided within the first lens group G1 becomes too weak (the focal length fasp is too long), so that when it is attempted to attain an f-number that is smaller that that of a conventional zoom lens system and having a sufficient speed, the correction of spherical aberration becomes insufficient.

If the lower limit of condition (3) is exceeded, the negative refractive power of the aspherical lens element (the negative lens element 12 in the present embodiments) provided within the first lens group G1 becomes too strong (the focal length fasp is too short) so that the tolerances for when the lens elements are assembled become extremely small, which greatly affects the mass-production process. Furthermore, a high precision is demanded by the aspherical surface shape, causing difficulty in molding, making it difficult to achieve a reliable optical quality.

Condition (4) specifies the Abbe number at the d-line of the aspherical lens element (the negative lens element 12 in the present embodiments) provided within the first lens group G1, which the first lens group G1 configured as described above. By satisfying condition (4), various aberrations such as lateral chromatic aberration, etc., can be favorably corrected, thereby achieving a superior optical quality.

If the lower limit of condition (4) is exceeded, correction of various aberrations such as lateral chromatic aberration, etc., becomes insufficient.

Condition (5) specifies the ratio of the focal length of the first lens group G1 to the focal length of the second lens group G2. By satisfying condition (5), the entire lens system can be maintained compact, while a superior optical quality can be achieved by favorably correcting spherical aberration and coma.

If the upper limit of condition (5) is exceeded, the negative refractive power of the first lens group G1 becomes too strong, whereby negative spherical aberration increases, so that this negative spherical aberration cannot be sufficiently corrected with only one positive lens element 13. Accordingly, the number of lens elements required in the first lens group G1 increases, so that the first lens group G1, and in turn the entire lens system, becomes enlarged.

If the lower limit of condition (5) is exceeded, the positive refractive power of the second lens group G2 becomes too strong, so that due to abaxial light rays condensing strongly, it becomes difficult to correct coma.

EMBODIMENTS

Specific first through seventh numerical embodiments will be herein discussed. In the various aberration diagrams, the lateral aberration diagrams and the tables, the d-line, g-line and C-line show aberrations at their respective wave-lengths; S designates the sagittal image, M designates the meridional image, FNO. designates the f-number, f designates the focal length of the entire optical system, W designates the half angle-of-view (°), Y designates the image height, fB designates the backfocus, L designates the entire length of the lens system, R designates the radius of curvature, d designates the lens thickness or distance between lenses, N(d) designates the refractive index at the d-line, and v(d) designates the Abbe number with respect to the d-line. The f-number, the focal length, the half angle-of-view, the image height, the backfocus, the overall length of the lens system, and the distance between lenses (which changes during zooming) are shown in the following order: short focal length extremity, intermediate focal length, and long focal length extremity. The unit used for lengths is defined in millimeters (mm).

An aspherical surface which is rotationally symmetrical about the optical axis is defined as:

$$x = cy^2/(1+[1-\{1+K\}c^2y^2]^{1/2})+A4y^4+A6y^6+A8y^8+A10y^{10}+A12y^{12}...$$

wherein 'c' designates the curvature (1/r), 'y' designates the distance from the optical axis, 'K' designates the conic coefficient, A4 designates a fourth-order aspherical coefficient, A6 designates a sixth-order aspherical coefficient, A8 designates an eighth-order aspherical coefficient, A10 designates a tenth-order aspherical coefficient, and 'x' designates the amount of sag.

In each of the first through seventh numerical embodiments, a fixed diaphragm (flare-cut diaphragm), not shown in the drawings, is provided in between the second lens group G2 (the second sub-lens group G2B) and the imaging plane; this fixed diaphragm constitutes the final surface in the lens data. The fixed diaphragm remains stationary relative to the imaging plane I during zooming from the short focal length extremity to the long focal length extremity (does not move in the optical axis direction), and has the function of optimizing the peripheral light quantity (cutting out harmful and unwanted light rays). Accordingly, the backfocus fB is the distance on the optical axis between the fixed diaphragm and the imaging plane I, and is a fixed value.

[Numerical Embodiment 1]

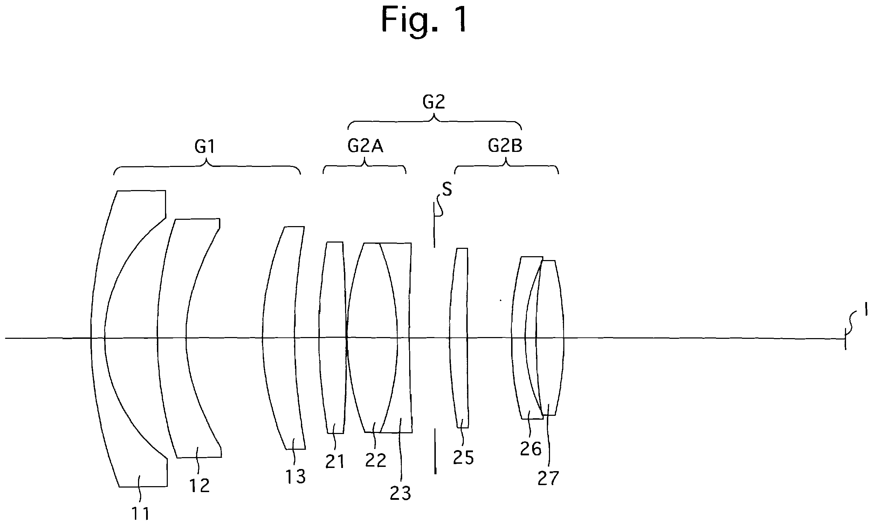

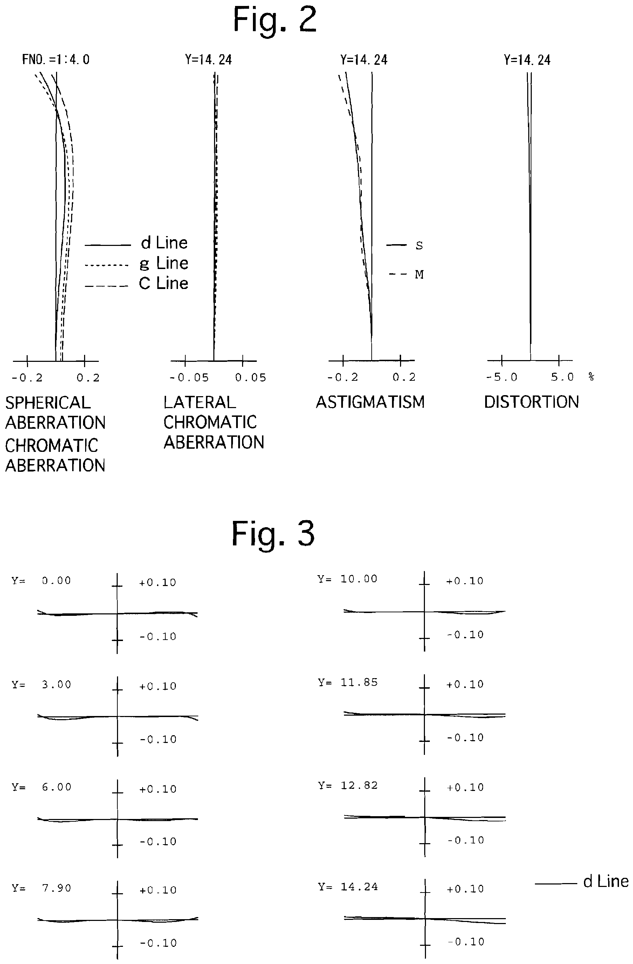

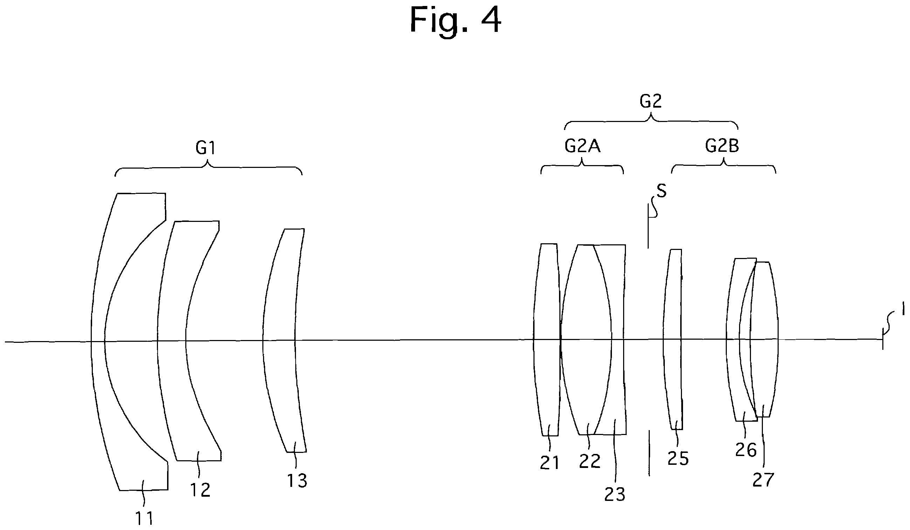

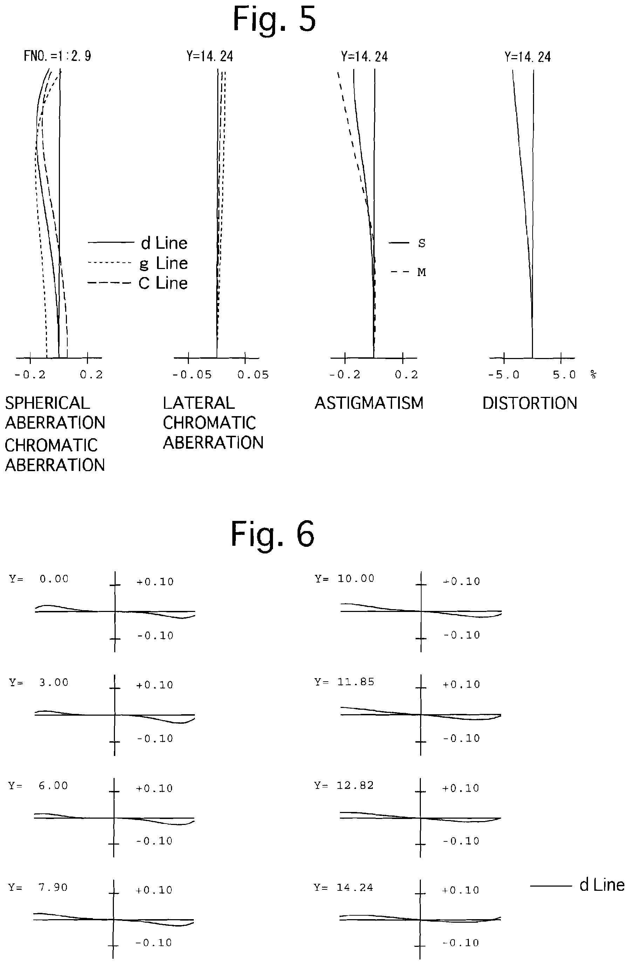

FIGS. 1 through 6 and Tables 1 through 4 show a first numerical embodiment of the zoom lens system according to the present invention. FIG. 1 shows the lens arrangement at the long focal length extremity when focused on an object at infinity, FIG. 2 shows the various aberrations thereof, FIG. 3 shows the lateral aberrations thereof; FIG. 4 shows the lens arrangement at the short focal length extremity when focused on an object at infinity, FIG. 5 shows the various aberrations thereof, and FIG. 6 shows the lateral aberrations thereof. Table 1 shows the lens surface data, Table 2 shows the aspherical surface data, Table 3 shows various data of the zoom lens system, and Table 4 shows various data of the lens groups.

The zoom lens system of the first numerical embodiment is configured of a negative first lens group G1 and a positive second lens group G2, in that order from the object side.

The first lens group G1 is configured of a negative meniscus lens element 11 having a convex surface on the object side, a negative meniscus lens element 12 having a convex surface on the object side, and a positive meniscus lens element 13 having a convex surface on the object side, in that order from the object side. The negative meniscus lens element 12 has an aspherical surface on the image side thereof.

The second lens group G2 is configured of a positive first sub-lens group G2A, an aperture diaphragm S, and a positive second sub-lens group G2B, in that order from the object side.

The first sub-lens group G2A is configured of a biconvex positive lens element 21, and a cemented lens having a biconvex positive lens element 22 and a biconcave negative lens element 23, in that order from the object side.

The second sub-lens group G2B is configured of a positive meniscus lens element 25 having a convex surface on the object side, a negative meniscus lens element 26 having a convex surface on the object side, and a biconvex positive lens element 27, in that order from the object side.

[TABLE 1]

SURFACE DATA

| Surf.No. | R | d | N(d) | ν(d) |
|---|---|---|---|---|
| 1 | 47.867 | 1.562 | 1.72916 | 54.7 |
| 2 | 17.097 | 6.060 | | |
| 3 | 46.121 | 3.240 | 1.68900 | 52.8 |
| 4* | 19.326 | 8.761 | | |
| 5 | 33.188 | 3.660 | 1.76182 | 26.5 |
| 6 | 69.829 | d6 | | |
| 7 | 64.514 | 3.060 | 1.74320 | 49.3 |
| 8 | -175.121 | 0.100 | | |
| 9 | 30.912 | 5.753 | 1.49700 | 81.6 |
| 10 | -30.274 | 1.340 | 1.78800 | 47.4 |
| 11 | 201.409 | 2.900 | | |
| 12(Diaphragm) | ∞ | 1.650 | | |
| 13 | 62.059 | 1.993 | 1.71700 | 47.9 |
| 14 | 441.646 | 5.123 | | |
| 15 | 42.455 | 1.483 | 1.84666 | 23.8 |
| 16 | 20.899 | 1.267 | | |
| 17 | 64.749 | 3.166 | 1.60300 | 65.5 |
| 18 | -37.958 | d18 | | |
| 19 | ∞ | | | |

[TABLE 2]

ASPHERICAL SURFACE DATA

| Surface No. | K | A4 | A6 | A8 | A10 |
|---|---|---|---|---|---|
| 4 | 0.000 | -0.1834E-04 | -0.7423E-07 | 0.8340E-10 | -0.8259E-12 |

[TABLE 3]

VARIOUS LENS-SYSTEM DATA

ZOOM RATIO: 1.89

| | Short Focal Length Extremity | Intermediate Focal Length | Long Focal Length Extremity |
|---|---|---|---|
| FNO. | 2.9 | 2.9 | 4.0 |
| f | 20.60 | 30.00 | 39.00 |
| W | 35.7 | 25.7 | 20.2 |
| Y | 14.24 | 14.24 | 14.24 |
| fB | 37.02 | 37.02 | 37.02 |
| L | 117.24 | 111.39 | 113.09 |

(continued)

| | Short Focal Length Extremity | Intermediate Focal Length | Long Focal Length Extremity |
|---|---|---|---|
| d6 | 27.117 | 10.964 | 2.796 |
| d18 | 1.980 | 12.287 | 22.155 |

[TABLE 4]

LENS GROUP DATA

| Lens Group | 1st Surf. | Focal Length |
|---|---|---|
| 1 | 1 | -31.12 |
| 2 | 7 | 34.12 |

[Numerical Embodiment 2]

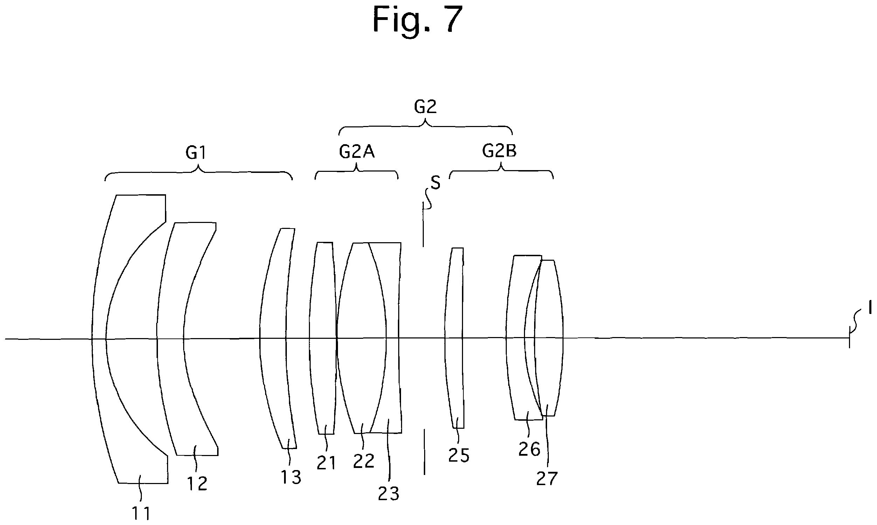

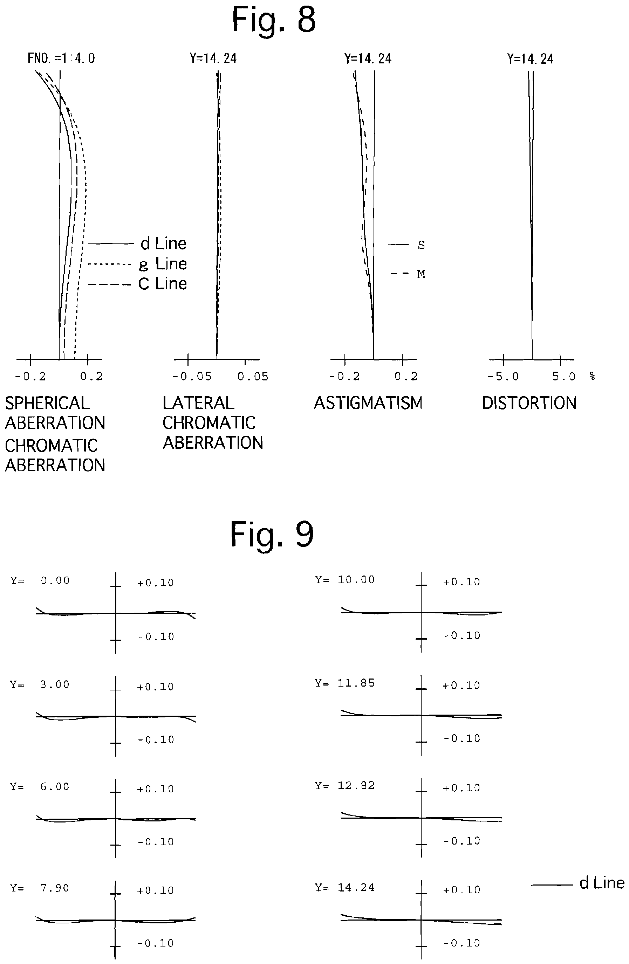

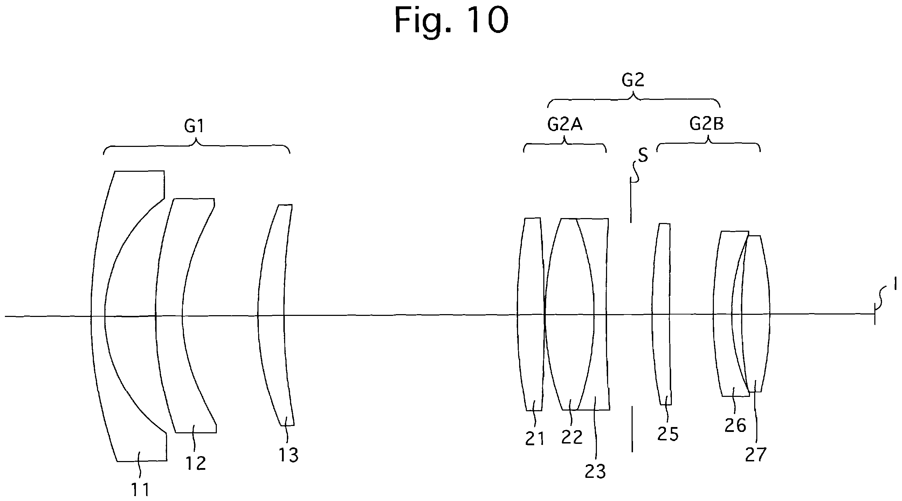

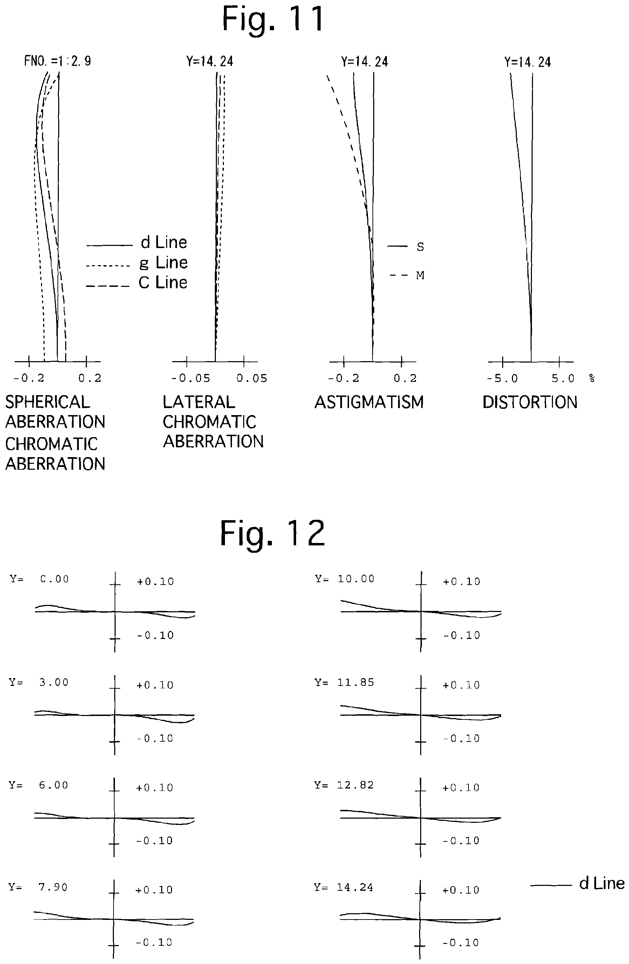

FIGS. 7 through 12 and Tables 5 through 8 show a second numerical embodiment of the zoom lens system according to the present invention. FIG. 7 shows the lens arrangement at the long focal length extremity when focused on an object at infinity, FIG. 8 shows the various aberrations thereof, FIG. 9 shows the lateral aberrations thereof; FIG. 10 shows the lens arrangement at the short focal length extremity when focused on an object at infinity, FIG. 11 shows the various aberrations thereof, and FIG. 12 shows the lateral aberrations thereof. Table 5 shows the lens surface data, Table 6 shows the aspherical surface data, Table 7 shows various data of the zoom lens system, and Table 8 shows various data of the lens groups.

The lens arrangement of the second numerical embodiment is the same as that of the first numerical embodiment.

[TABLE 5]

SURFACE DATA

| Surf.No. | R | d | N (d) | $\nu$(d) |
|---|---|---|---|---|
| 1 | 49.778 | 1.566 | 1.74131 | 53.5 |
| 2 | 16.620 | 5.824 | | |
| 3 | 43.044 | 3.022 | 1.68900 | 52.8 |
| 4* | 19.268 | 8.658 | | |
| 5 | 33.549 | 2.976 | 1.74498 | 27.2 |
| 6 | 75.431 | d6 | | |
| 7 | 62.066 | 3.091 | 1.74120 | 45.0 |
| 8 | -156.112 | 0.100 | | |
| 9 | 32.585 | 5.632 | 1.49700 | 81.6 |
| 10 | -30.923 | 1.340 | 1.78800 | 47.4 |
| 11 | 180.404 | 2.900 | | |
| 12 (Diaphragm) | $\infty$ | 2.363 | | |
| 13 | 60.924 | 2.010 | 1.68002 | 56.1 |
| 14 | 432.231 | 4.959 | | |
| 15 | 47.435 | 2.101 | 1.84999 | 23.7 |
| 16 | 21.481 | 1.131 | | |
| 17 | 54.555 | 3.253 | 1.60300 | 65.5 |
| 18 | -38.073 | d18 | | |
| 19 | $\infty$ | | | |

[TABLE 6]

ASPHERICAL SURFACE DATA

| Surface No. | K | A4 | A6 | A8 | A10 |
|---|---|---|---|---|---|
| 4 | 0.000 | -0.2028E-04 | -0.8080E-07 | 0 . 8643E-10 | -0.9806E-12 |

[TABLE 7]

VARIOUS LENS-SYSTEM DATA

ZOOM RATIO: 1.89

|  | Short Focal Length Extremity | Intermediate Focal Length | Long Focal Length Extremity |
|---|---|---|---|
| FNO. | 2.9 | 2.9 | 4.0 |
| f | 20.60 | 30.00 | 39.00 |
| W | 35.7 | 25.8 | 20.2 |
| Y | 14.24 | 14.24 | 14.24 |
| fB | 37.13 | 37.13 | 37.13 |
| L | 116.60 | 111.28 | 113.36 |
| d6 | 26.570 | 10.684 | 2.650 |
| d18 | 1.980 | 12.542 | 22.654 |

[TABLE 8]

LENS GROUP DATA

| Lens Group | 1st Surf. | Focal Length |
|---|---|---|
| 1 | 1 | -30.49 |
| 2 | 7 | 34.26 |

[Numerical Embodiment 3]

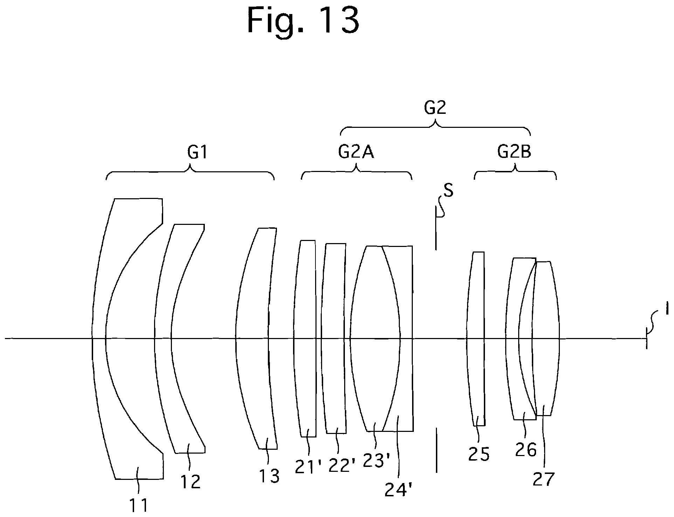

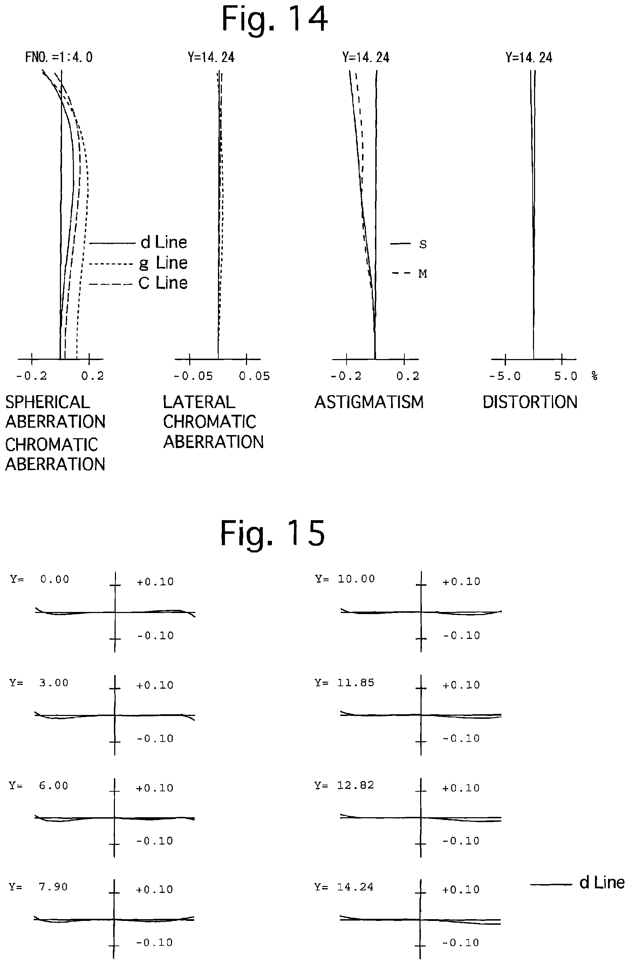

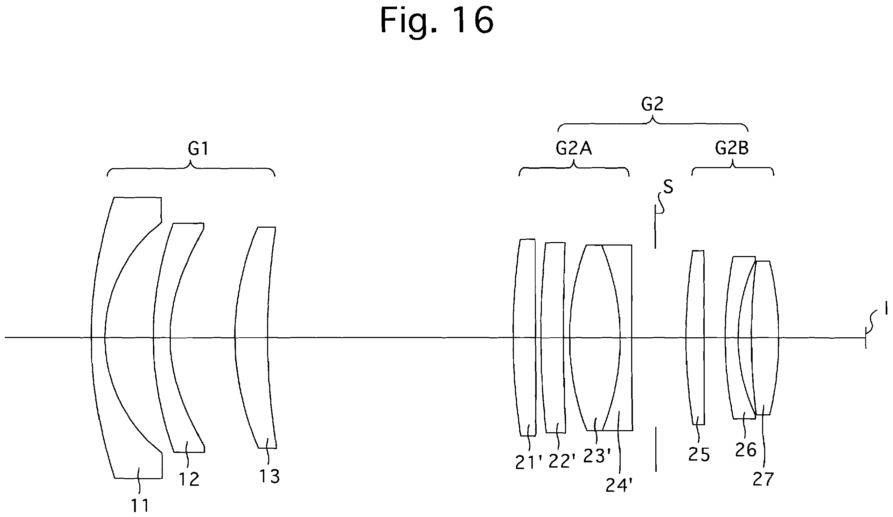

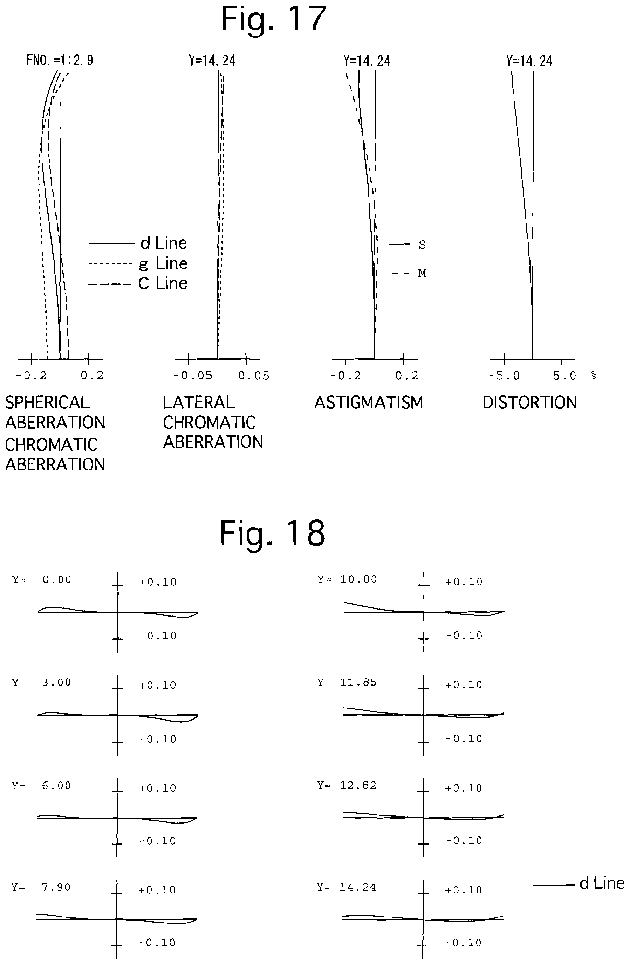

FIGS. 13 through 18 and Tables 9 through 12 show a third numerical embodiment of the zoom lens system according to the present invention. FIG. 13 shows the lens arrangement at the long focal length extremity when focused on an object at infinity, FIG. 14 shows the various aberrations thereof, FIG. 15 shows the lateral aberrations thereof; FIG. 16 shows the lens arrangement at the short focal length extremity when focused on an object at infinity, FIG. 17 shows the various aberrations thereof, and FIG. 18 shows the lateral aberrations thereof. Table 9 shows the lens surface data, Table 10 shows the aspherical surface data, Table 11 shows various data of the zoom lens system, and Table 12 shows various data of the lens groups.

The lens arrangement of the third numerical embodiment is the same as that of the first numerical embodiment except for the following features:

(1) The first sub-lens group G2A is configured of a biconvex positive lens element 21', a positive meniscus lens element 22' having a convex surface on the object side, and a cemented lens having a biconvex positive lens element 23' and a biconcave negative lens element 24', in that order from the object side.

(2) The positive lens element 25 of the second sub-lens group G2B is a biconvex positive lens element.

[TABLE 9]

SURFACE DATA

| Surf.No. | R | d | N(d) | $\nu$(d) |
|---|---|---|---|---|
| 1 | 51.646 | 1.512 | 1.79799 | 47.6 |
| 2 | 16.830 | 5.572 | | |
| 3 | 38.967 | 1.900 | 1.71299 | 53.9 |
| 4* | 19.125 | 7.396 | | |
| 5 | 32.357 | 3.713 | 1.76307 | 27.7 |
| 6 | 82.972 | d6 | | |
| 7 | 78.939 | 2.577 | 1.80000 | 41.9 |
| 8 | -1027.312 | 0.600 | | |
| 9 | 107.949 | 2.582 | 1.76000 | 43.3 |
| 10 | 289.084 | 0.713 | | |
| 11 | 31.892 | 5.702 | 1.49700 | 81.6 |
| 12 | -28.374 | 1.340 | 1.79990 | 46.5 |

(continued)

SURFACE DATA

| | | | | |
|---|---|---|---|---|
| 13 | 4542.080 | 2.700 | | |
| 14 (Diaphragm) | ∞ | 3.510 | | |
| 15 | 66.811 | 2.011 | 1.78102 | 48.2 |
| 16 | -4706.309 | 2.426 | | |
| 17 | 48.729 | 1.480 | 1.83982 | 23.6 |
| 18 | 21.145 | 1.547 | | |
| 19 | 77.164 | 3.085 | 1.60300 | 65.5 |
| 20 | -38.128 | d20 | | |
| 21 | ∞ | | | |

[TABLE 10]

ASPHERICAL SURFACE DATA

| Surf.No. | K | A4 | A6 | A8 |
|---|---|---|---|---|
| 4 | 0.000 | -0.2024E-04 | -0.6888E-07 | -0.2165E-10 |

| Surf.No. | A10 | A12 |
|---|---|---|
| 4 | -0.3632 E-12 | -0.1248E-14 |

[TABLE 11]

VARIOUS LENS-SYSTEM DATA

ZOOM RATIO: 1.89

| | Short Focal Length Extremity | Intermediate Focal Length | Long Focal Length Extremity |
|---|---|---|---|
| FNO. | 2.9 | 2.9 | 4.0 |
| f | 20.60 | 30.00 | 39.00 |
| W | 35.7 | 25.8 | 20.2 |
| Y | 14.24 | 14.24 | 14.24 |
| fB | 37.02 | 37.02 | 37.02 |
| L | 117.32 | 110.90 | 112.29 |
| d6 | 27.956 | 11.301 | 2.878 |
| d20 | 1.980 | 12.222 | 22.028 |

[TABLE 12]

LENS GROUP DATA

| Lens Group | 1st Surf. | Focal Length |
|---|---|---|
| 1 | 1 | -31.70 |
| 2 | 7 | 34.54 |

[Numerical Embodiment 4]

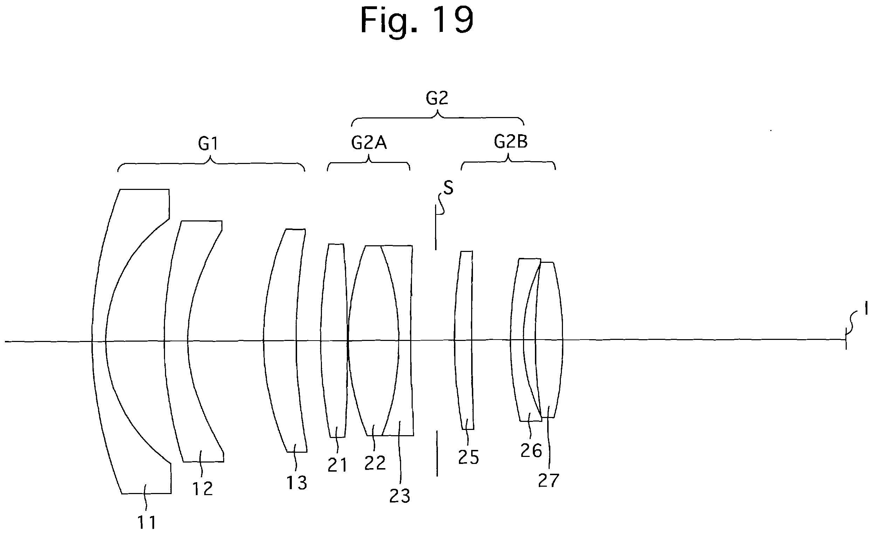

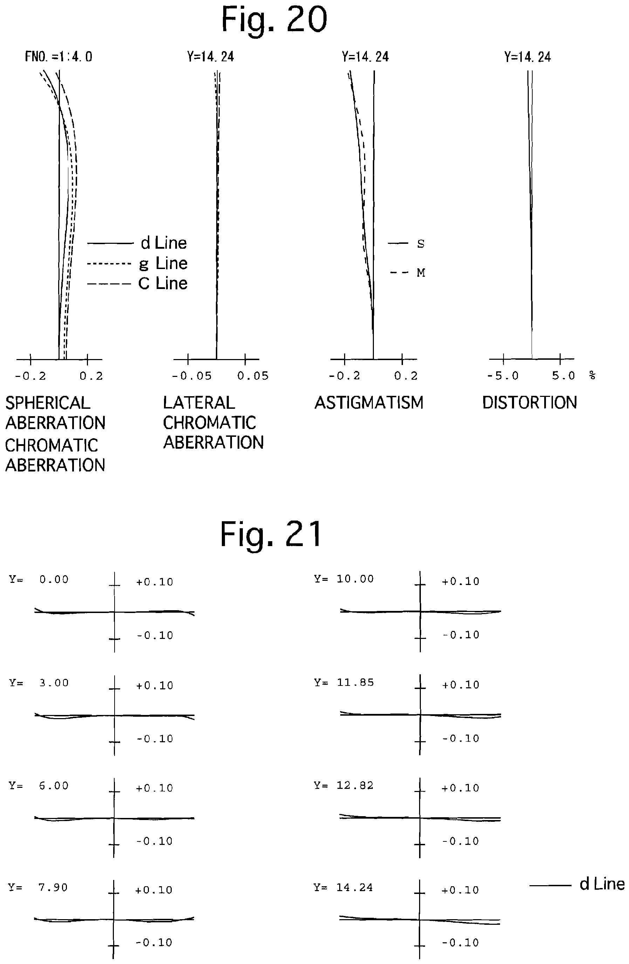

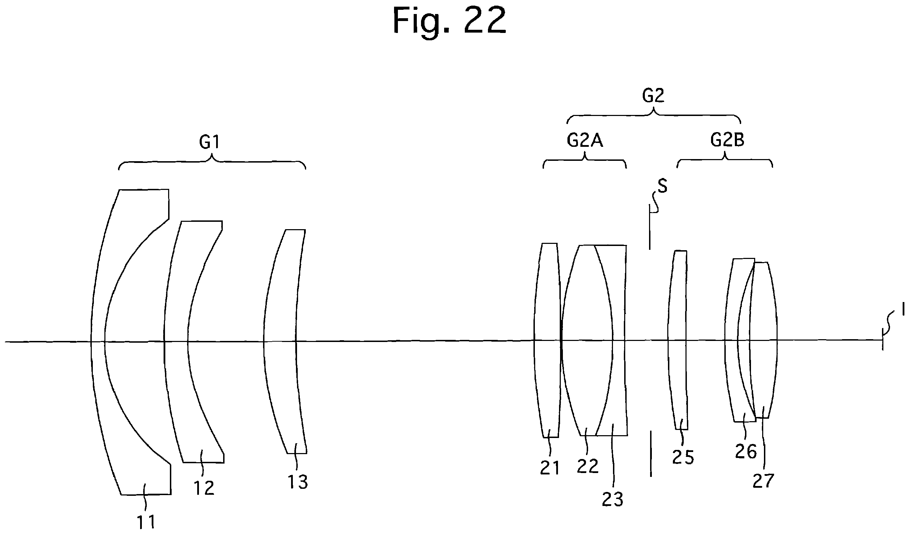

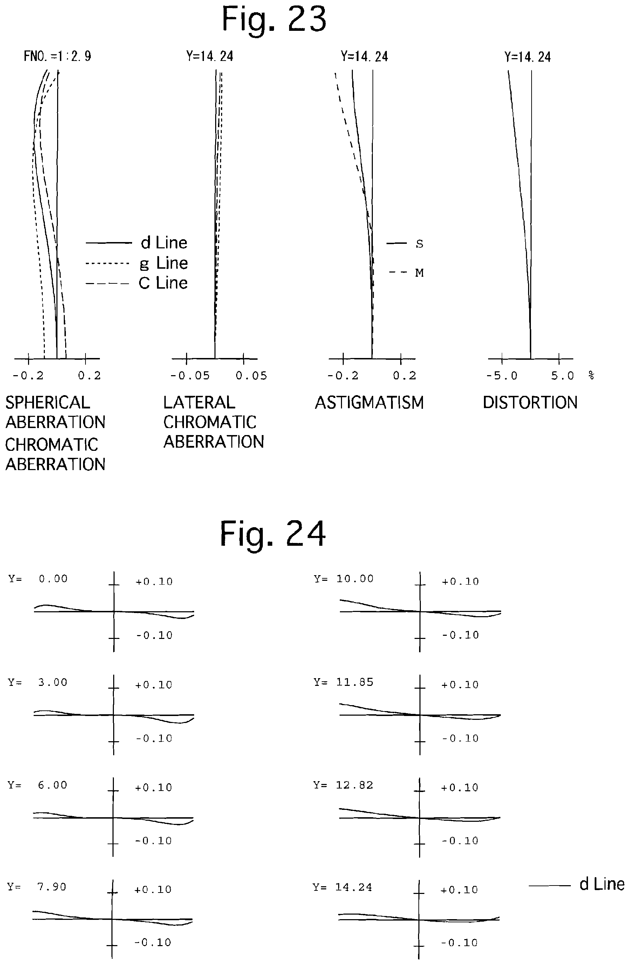

FIGS. 19 through 24 and Tables 13 through 16 show a fourth numerical embodiment of the zoom lens system according to the present invention. FIG. 19 shows the lens arrangement at the long focal length extremity when focused on an object at infinity, FIG. 20 shows the various aberrations thereof, FIG. 21 shows the lateral aberrations thereof; FIG. 22 shows the lens arrangement at the short focal length extremity when focused on an object at infinity, FIG. 23 shows the various aberrations thereof, and FIG. 24 shows the lateral aberrations thereof. Table 13 shows the lens surface data, Table 14 shows the aspherical surface data, Table 15 shows various data of the zoom lens system, and Table 16 shows various data of the lens groups.

The lens arrangement of the fourth numerical embodiment is the same as that of the first numerical embodiment.

[TABLE 13]

SURFACE DATA

| Surf.No. | R | d | N (d) | ν(d) |
|---|---|---|---|---|
| 1 | 47.976 | 1.550 | 1.72916 | 54.7 |
| 2 | 17.096 | 6.720 | | |
| 3 | 46.686 | 2.710 | 1.68900 | 52.8 |
| 4* | 19.513 | 8.620 | | |
| 5 | 33.152 | 3.660 | 1.76182 | 26.5 |
| 6 | 69.323 | d6 | | |
| 7 | 63.103 | 3.060 | 1.74320 | 49.3 |
| 8 | -167.160 | 0.100 | | |
| 9 | 30.519 | 5.760 | 1.49700 | 81.6 |
| 10 | -30.519 | 1.340 | 1.78800 | 47.4 |
| 11 | 216.000 | 2.900 | | |
| 12(Diaphragm) | ∞ | 2.070 | | |
| 13 | 63.948 | 1.950 | 1.71700 | 47.9 |
| 14 | 342.890 | 4.470 | | |
| 15 | 42.360 | 1.480 | 1.84666 | 23.8 |
| 16 | 20.828 | 1.360 | | |
| 17 | 67.524 | 3.150 | 1.60300 | 65.5 |
| 18 | -37.634 | d18 | | |
| 19 | ∞ | | | |

[TABLE 14]

ASPHERICAL SURFACE DATA

| Surf. No. | K | A4 | A6 | A8 | A10 |
|---|---|---|---|---|---|
| 4 | 0.000 | -0.1770E-04 | -0.6850E-07 | 0.5050E-10 | -0.6878E-12 |

[TABLE 15]

VARIOUS LENS-SYSTEM DATA
ZOOM RATIO: 1.89

| | Short Focal Length Extremity | Intermediate Focal Length | Long Focal Length Extremity |
|---|---|---|---|
| FNO. | 2.9 | 2.9 | 4.0 |
| f | 20.59 | 30.00 | 39.00 |
| W | 35.8 | 25.8 | 20.2 |
| Y | 14.24 | 14.24 | 14.24 |
| fB | 37.02 | 37.02 | 37.02 |
| L | 116.95 | 111.18 | 112.94 |
| d6 | 27.056 | 10.946 | 2.805 |
| d18 | 1.980 | 12.320 | 22.215 |

[TABLE 16]

LENS GROUP DATA

| Lens Group | 1st Surf. | Focal Length |
|---|---|---|
| 1 | 1 | -31.03 |
| 2 | 7 | 34.11 |

[Numerical Embodiment 5]

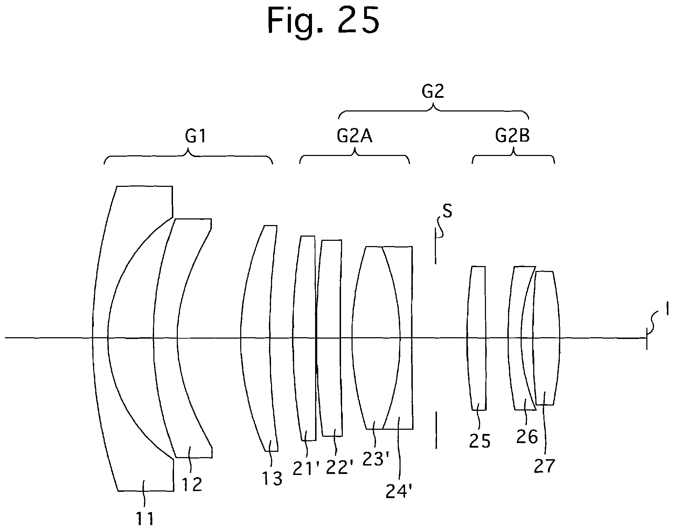

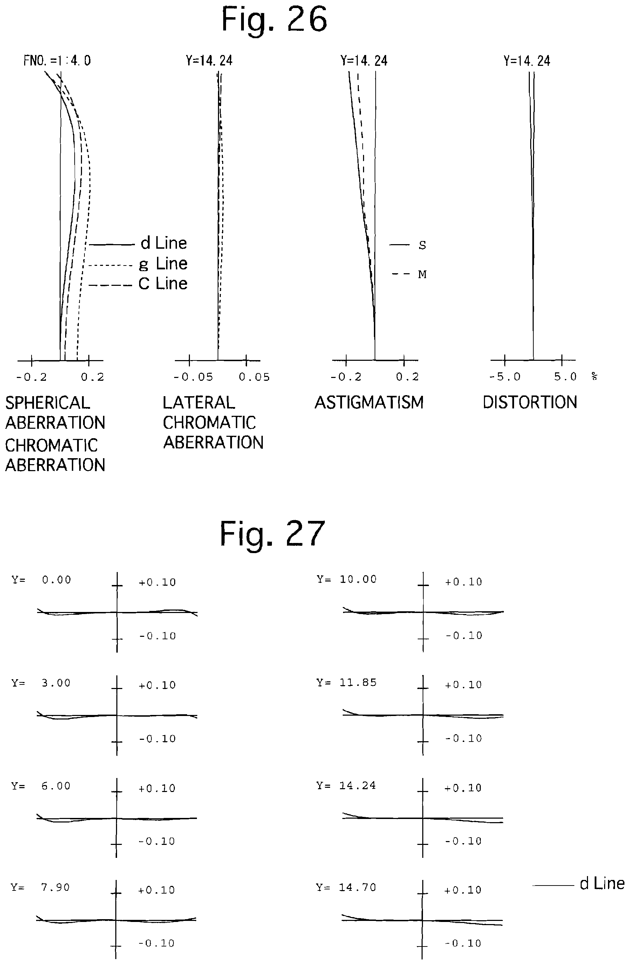

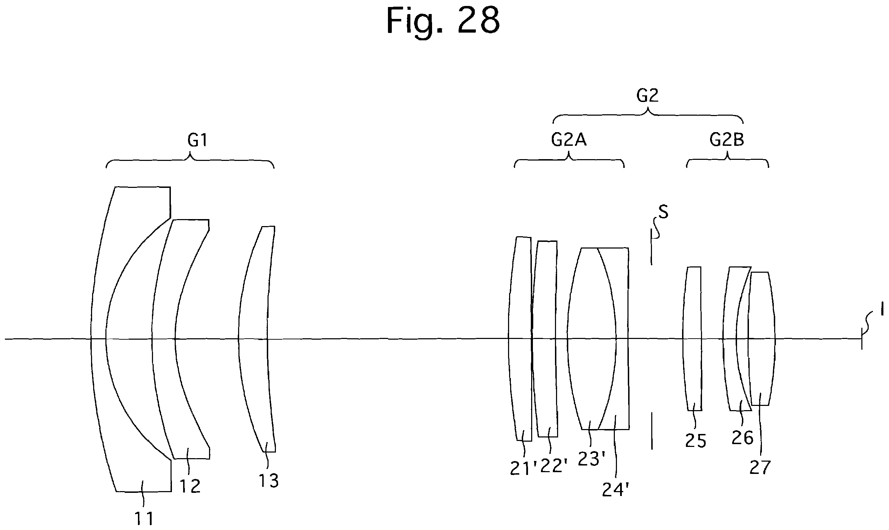

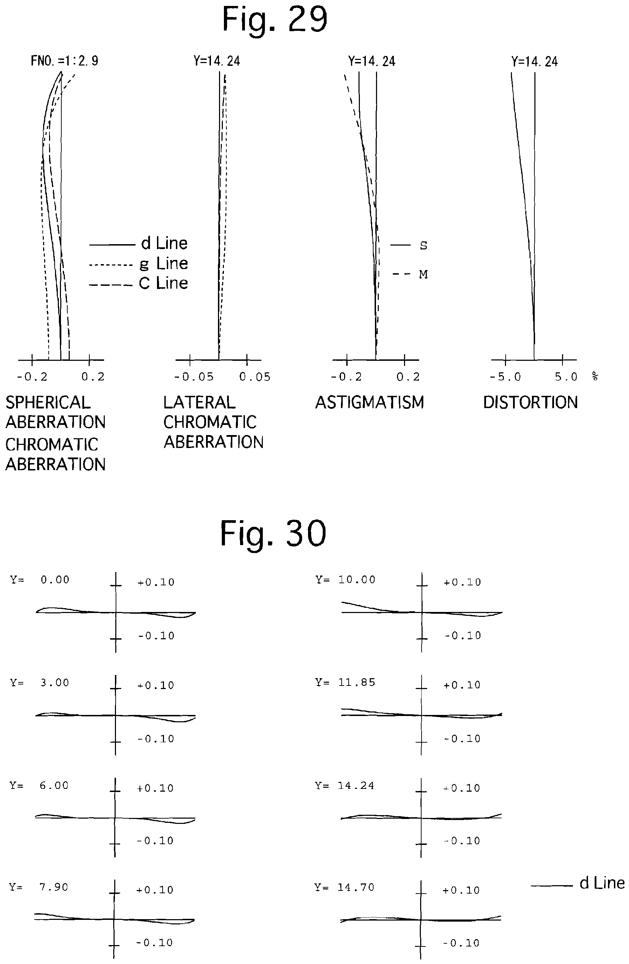

FIGS. 25 through 30 and Tables 17 through 20 show a fifth numerical embodiment of the zoom lens system according to the present invention. FIG. 25 shows the lens arrangement at the long focal length extremity when focused on an object at infinity, FIG. 26 shows the various aberrations thereof, FIG. 27 shows the lateral aberrations thereof; FIG. 28 shows the lens arrangement at the short focal length extremity when focused on an object at infinity, FIG. 29 shows the various aberrations thereof, and FIG. 30 shows the lateral aberrations thereof. Table 17 shows the lens surface data, Table 18 shows the aspherical surface data, Table 19 shows various data of the zoom lens system, and Table 20 shows various data of the lens groups.

The lens arrangement of the fifth numerical embodiment is the same as that of the third numerical embodiment.

[TABLE 17]

SURFACE DATA

| Surf.No. | R | d | N (d) | $\nu$(d) |
|---|---|---|---|---|
| 1 | 55.395 | 1.722 | 1.77787 | 47.8 |
| 2 | 16.822 | 5.237 | | |
| 3 | 39.094 | 2.673 | 1.71299 | 53.9 |
| 4* | 18.892 | 7.258 | | |
| 5 | 32.407 | 3.273 | 1.74077 | 27.8 |
| 6 | 92.638 | d6 | | |
| 7 | 73.007 | 2.618 | 1.80000 | 40.1 |
| 8 | -1842.033 | 0.100 | | |
| 9 | 96.495 | 2.674 | 1.73000 | 42.9 |
| 10 | 313.394 | 1.340 | | |
| 11 | 34.867 | 5.524 | 1.49700 | 81.6 |
| 12 | -27.524 | 1.340 | 1.79999 | 44.3 |
| 13 | 539.709 | 2.700 | | |
| 14 (Diaphragm) | $\infty$ | 3.598 | | |
| 15 | 62.501 | 2.116 | 1.75999 | 51.3 |
| 16 | -459.755 | 2.500 | | |
| 17 | 47.505 | 1.480 | 1.84666 | 23.8 |
| 18 | 21.335 | 1.347 | | |
| 19 | 84.112 | 3.056 | 1.60300 | 65.5 |
| 20 | -37.920 | d20 | | |
| 21 | $\infty$ | | | |

[TABLE 18]

ASPHERICAL SURFACE DATA

| Surface No. | K | A4 | A6 | A8 | A10 |
|---|---|---|---|---|---|
| 4 | 0.000 | -0.2145E-04 | -0.7588E-07 | 0.3377E-10 | -0.8685E-12 |

[TABLE 19]

VARIOUS LENS-SYSTEM DATA

ZOOM RATIO: 1.89

| | Short Focal Length Extremity | Intermediate Focal Length | Long Focal Length Extremity |
|---|---|---|---|
| FNO. | 2.8 | 3.5 | 4.1 |
| f | 20.60 | 30.00 | 39.00 |
| W | 36.7 | 26.5 | 20.8 |
| Y | 14.70 | 14.70 | 14.70 |
| fB | 37.03 | 37.03 | 37.03 |
| L | 117.12 | 110.84 | 112.30 |

(continued)

| | Short Focal Length Extremity | Intermediate Focal Length | Long Focal Length Extremity |
|---|---|---|---|
| d6 | 27.550 | 11.012 | 2.648 |
| d20 | 1.980 | 12.238 | 22.059 |

[TABLE 20]

LENS GROUP DATA

| Lens Group | 1st Surf. | Focal Length |
|---|---|---|
| 1 | 1 | -31.57 |
| 2 | 7 | 34.45 |

[Numerical Embodiment 6]

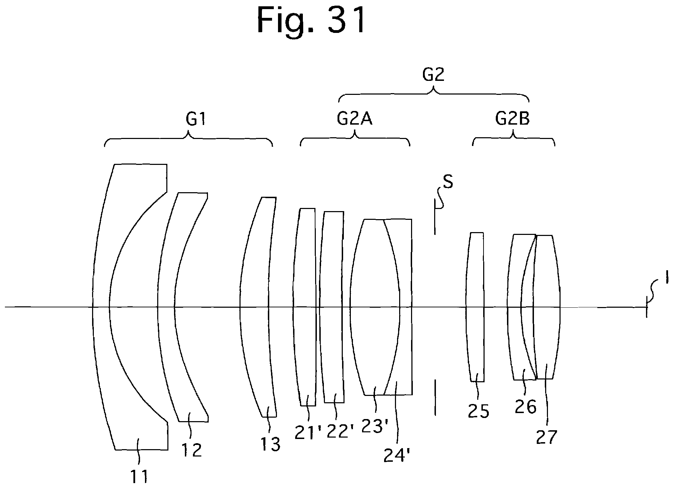

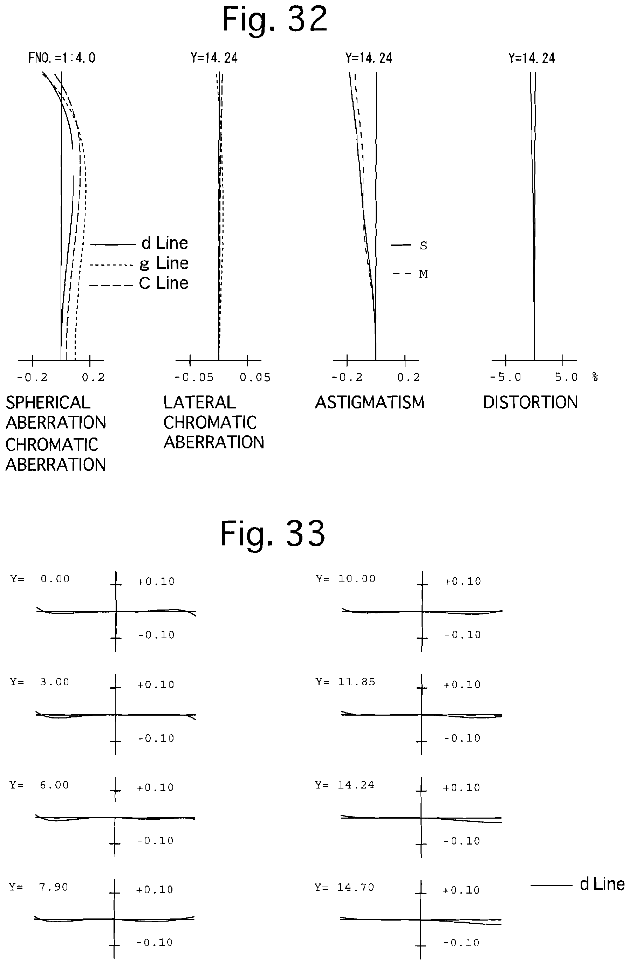

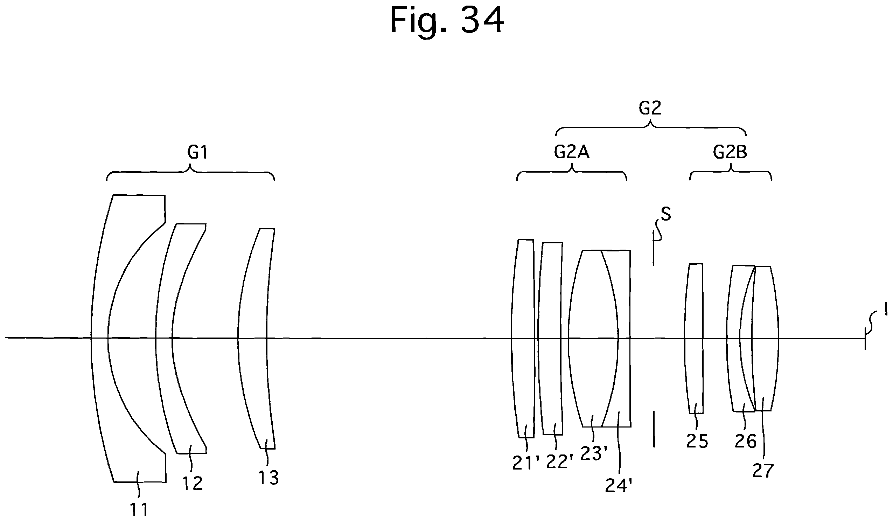

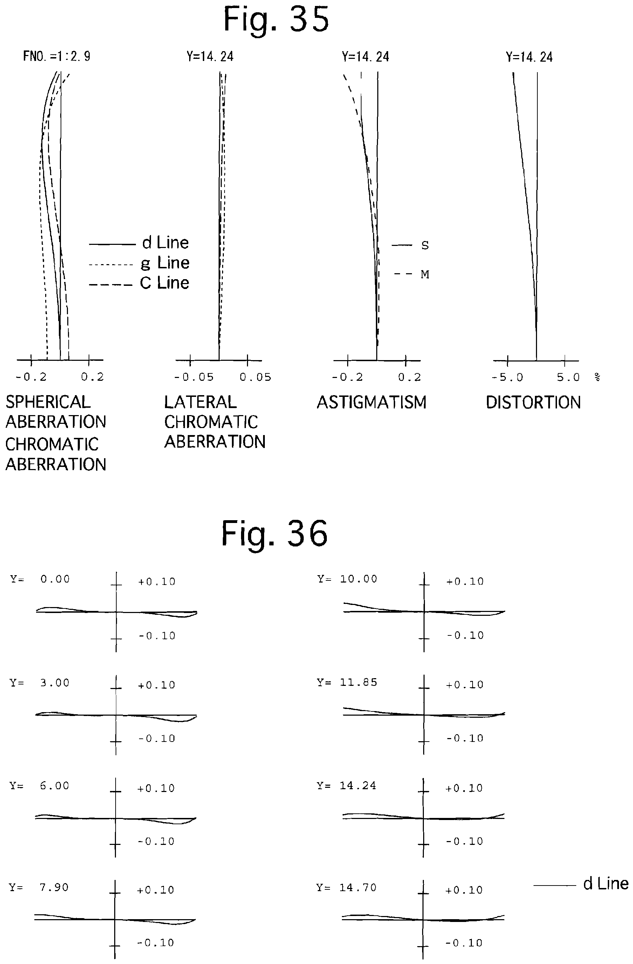

FIGS. 31 through 36 and Tables 21 through 24 show a sixth numerical embodiment of the zoom lens system according to the present invention. FIG. 31 shows the lens arrangement at the long focal length extremity when focused on an object at infinity, FIG. 32 shows the various aberrations thereof, FIG. 33 shows the lateral aberrations thereof; FIG. 34 shows the lens arrangement at the short focal length extremity when focused on an object at infinity, FIG. 35 shows the various aberrations thereof, and FIG. 36 shows the lateral aberrations thereof. Table 21 shows the lens surface data, Table 22 shows the aspherical surface data, Table 23 shows various data of the zoom lens system, and Table 24 shows various data of the lens groups.

The lens arrangement of the sixth numerical embodiment is the same as that of the third numerical embodiment.

[TABLE 21]

SURFACE DATA

| Surf.No. | R | d | N (d) | $\nu$(d) |
|---|---|---|---|---|
| 1 | 54.869 | 1.918 | 1.79513 | 47.8 |
| 2 | 16.800 | 5.480 | | |
| 3 | 38.176 | 1.900 | 1.71299 | 53.9 |
| 4* | 19.302 | 7.457 | | |
| 5 | 32.778 | 3.282 | 1.75332 | 27.5 |
| 6 | 86.558 | d6 | | |
| 7 | 79.637 | 2.632 | 1.78309 | 45.7 |
| 8 | -517.700 | 0.400 | | |
| 9 | 110.583 | 2.547 | 1.75871 | 32.7 |
| 10 | 261.030 | 0.900 | | |
| 11 | 32.450 | 5.701 | 1.49700 | 81.6 |
| 12 | -28.208 | 1.340 | 1.79999 | 44.9 |
| 13 | 1082.321 | 2.700 | | |
| 14 (Diaphragm) | ∞ | 3.481 | | |
| 15 | 64.538 | 2.050 | 1.78958 | 47.6 |
| 16 - | -1595.871 | 2.697 | | |
| 17 | 48.360 | 1.536 | 1.83733 | 23.6 |
| 18 | 21.187 | 1.357 | | |
| 19 | 78.886 | 3.075 | 1.60300 | 65.5 |
| 20 | -38.173 | d20 | | |
| 21 | ∞ | | | |

[TABLE 22]
ASPHERICAL SURFACE DATA

| Surf.No. | K | A4 | A6 | A8 |
|---|---|---|---|---|
| 4 | 0.000 | -0.2023E-04 | -0.7262E-07 | 0.3586E-10 |

| Surf.No. | A10 | A12 |
|---|---|---|
| 4 | -0.6599E-12 | -0.6902E-15 |

[TABLE 23]
VARIOUS LENS-SYSTEM DATA
ZOOM RATIO: 1.89

| | Short Focal Length Extremity | Intermediate Focal Length | Long Focal Length Extremity |
|---|---|---|---|
| FNO. | 2.9 | 3.5 | 4.0 |
| f | 20.60 | 30.00 | 39.00 |
| W | 36.7 | 26.5 | 20.8 |
| Y | 14.70 | 14.70 | 14.70 |
| fB | 37.02 | 37.02 | 37.02 |
| L | 117.32 | 110.92 | 112.31 |
| d6 | 27.868 | 11.227 | 2.813 |
| d20 | 1.980 | 12.220 | 22.021 |

[TABLE 24]
LENS GROUP DATA

| Lens Group | 1st Surf. | Focal Length |
|---|---|---|
| 1 | 1 | -31.69 |
| 2 | 7 | 34.52 |

[Numerical Embodiment 7]

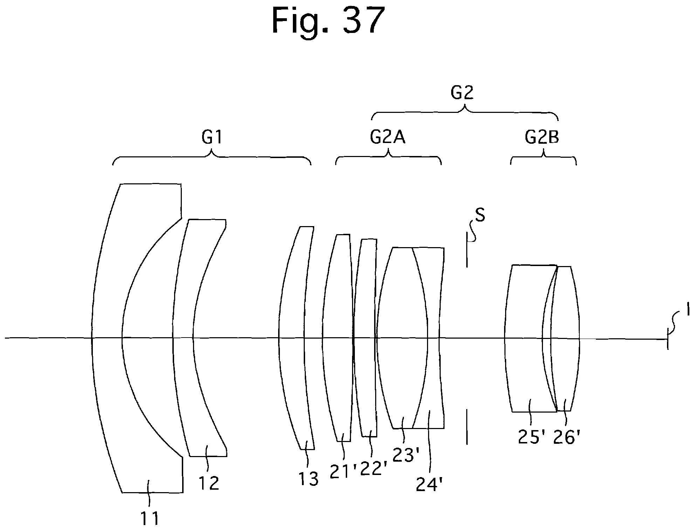

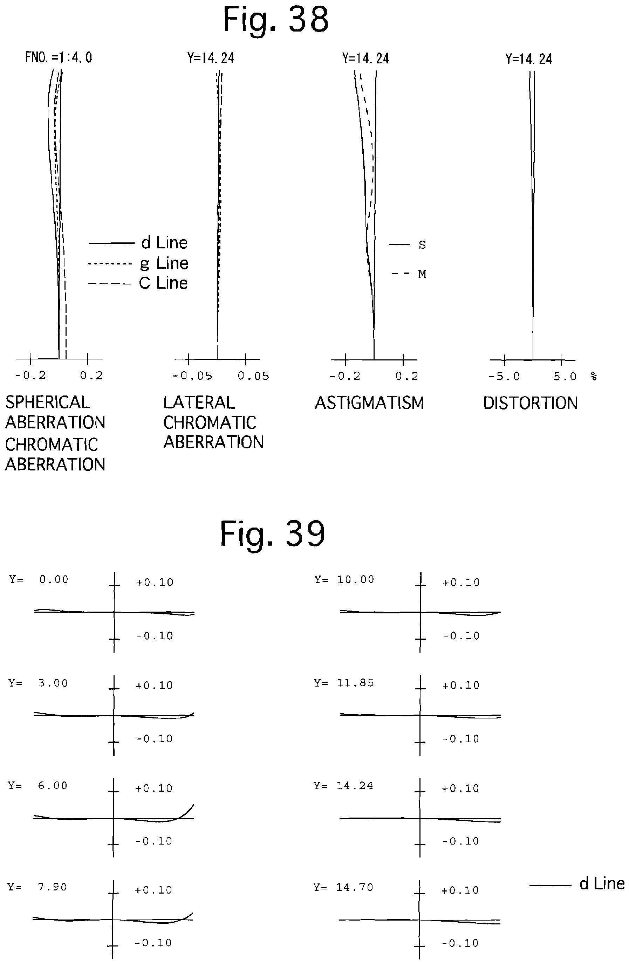

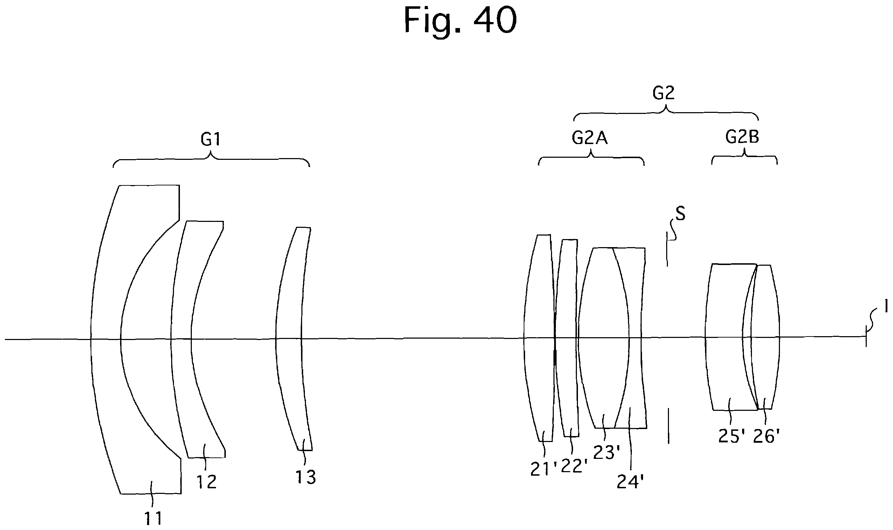

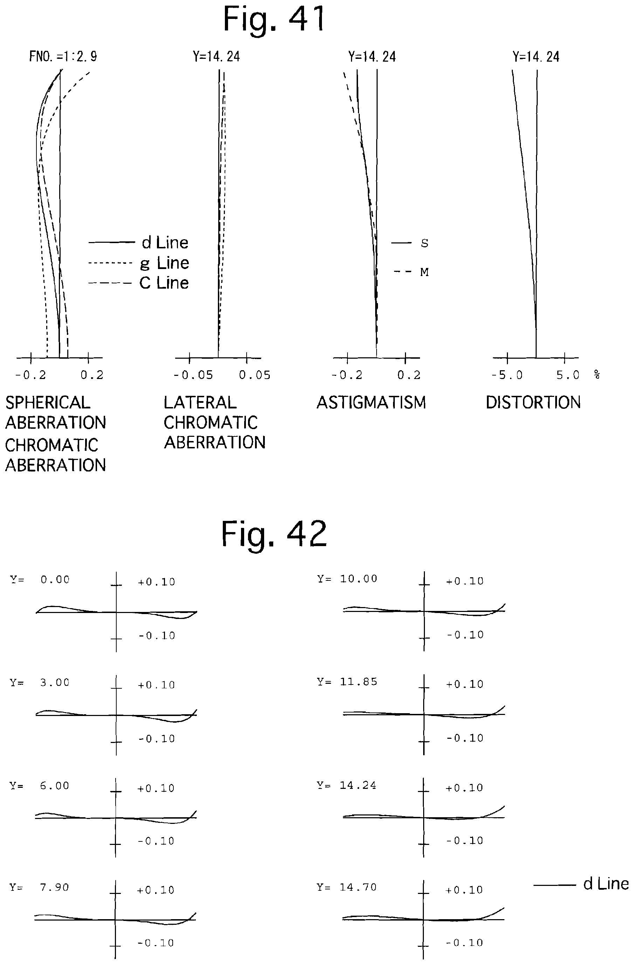

FIGS. 37 through 42 and Tables 25 through 28 show a seventh numerical embodiment of the zoom lens system according to the present invention. FIG. 37 shows the lens arrangement at the long focal length extremity when focused on an object at infinity, FIG. 38 shows the various aberrations thereof, FIG. 39 shows the lateral aberrations thereof; FIG. 40 shows the lens arrangement at the short focal length extremity when focused on an object at infinity, FIG. 41 shows the various aberrations thereof, and FIG. 42 shows the lateral aberrations thereof. Table 25 shows the lens surface data, Table 26 shows the aspherical surface data, Table 27 shows various data of the zoom lens system, and Table 28 shows various data of the lens groups.

The lens arrangement of the seventh numerical embodiment is the same as that of the third numerical embodiment except for the following features:

(1) The second sub-lens group G2B is configured of a negative meniscus lens element 25' having a convex surface on the object side, and a biconvex positive lens element 26', in that order from the object side.

[TABLE 25]
SURFACE DATA

| Surf.No. | R | d | N(d) | ν(d) |
|---|---|---|---|---|
| 1 | 49.052 | 3.403 | 1.77250 | 49.6 |
| 2 | 17.274 | 5.782 | | |
| 3 | 50.424 | 2.314 | 1.72916 | 54.7 |
| 4* | 20.431 | 9.715 | | |
| 5 | 34.822 | 2.875 | 1.78898 | 24.4 |

(continued)

SURFACE DATA

| Surf.No. | R | d | N(d) | ν(d) |
|---|---|---|---|---|
| 6 | 71.256 | d6 | | |
| 7 | 43.505 | 3.495 | 1.61161 | 40.2 |
| 8 | -191.247 | 0.100 | | |
| 9 | 71.252 | 2.384 | 1.48749 | 70.2 |
| 10 | 293.490 | 0.250 | | |
| 11 | 31.095 | 5.782 | 1.49700 | 81.6 |
| 12 | -31.095 | 1.340 | 1.78436 | 38.0 |
| 13 | 77.387 | 3.072 | | |
| 14(Diaphragm) | ∞ | 4.329 | | |
| 15 | 43.041 | 4.269 | 1.78616 | 25.1 |
| 16 | 21.316 | 0.968 | | |
| 17 | 44.553 | 3.303 | 1.61800 | 63.4 |
| 18 | -33.551 | d18 | | |
| 19 | ∞ | | | |

[TABLE 26]

ASPHERICAL SURFACE DATA

| Surf. No. | K | A4 | A6 | A8 | A10 |
|---|---|---|---|---|---|
| 4 | 0.000 | -0.1570E-04 | -0.5803E-07 | 0.6728E-10 | -0.6190E-12 |

[TABLE 27]

VARIOUS LENS-SYSTEM DATA

ZOOM RATIO: 1.89

| | Short Focal Length Extremity | Intermediate Focal Length | Long Focal Length Extremity |
|---|---|---|---|
| FNO. | 2.8 | 3.4 | 4.0 |
| f | 20.60 | 30.00 | 39.00 |
| W | 36.7 | 26.5 | 20.8 |
| Y | 14.70 | 14.70 | 14.70 |
| fB | 37.02 | 37.02 | 37.02 |
| L | 117.92 | 113.00 | 115.32 |
| d6 | 25.538 | 9.976 | 2.106 |
| d18 | 1.980 | 12.625 | 22.818 |

[TABLE 28]

LENS GROUP DATA

| Lens Group | 1st Surf. | Focal Length |
|---|---|---|
| 1 | 1 | -30.06 |
| 2 | 7 | 34.04 |

The numerical values of each condition for each embodiment are shown in Table 29.

[TABLE 29]

| | Embod.1 | Embod.2 | Embod.3 | Embod.4 |
|---|---|---|---|---|
| Cond.(1) | 0.749 | 0.769 | 0.652 | 0. 667 |
| Cond.(2) | 1.114 | 1.039 | 1.482 | 1.382 |

(continued)

|  | Embod.1 | Embod.2 | Embod.3 | Embod.4 |
|---|---|---|---|---|
| Cond.(3) | 1.716 | 1.751 | 1.731 | 1.635 |
| Cond.(4) | 52.8 | 52.8 | 53.9 | 52.8 |
| Cond.(5) | -0.912 | -0.890 | -0.918 | -0.910 |

|  | Embod.5 | Embod.6 | Embod.7 |
|---|---|---|---|
| Cond.(1) | 0.790 | 0.720 | 0.658 |
| Cond.(2) | 1.026 | 1.240 | 1.379 |
| Cond.(3) | 1.719 | 1.803 | 1. 62 |
| Cond. (4) | 53.87 | 53.87 | 54.68 |
| Cond. (5) | -0.916 | -0.918 | -0.883 |

As can be understood from Table 29, the first through seventh numerical embodiments satisfy conditions (1) through (5) . As can be understood from the various aberration diagrams and the lateral aberration diagrams, the various aberrations and the lateral aberrations are relatively well corrected.

Even if a lens element or lens group having effectively no refractive power were to be added to the zoom lens system included in the scope of the clams of the present invention, such a zoom lens system would still remain within the technical scope of the present invention (and would not be excluded from the technical scope of the present invention).

INDUSTRIAL APPLICABILITY

The zoom lens system of the present invention is ideal for use in a photographing apparatus such as a digital camera, etc.

REFERENCE SIGNS LIST

G1      Negative first lens group
11      Negative lens element
12      Negative lens element
13      Positive lens element
G2      Positive second lens group
G2A     Positive first sub-lens group
21      Positive lens element
22      Positive lens element
23      Negative lens element
21'     Positive lens element
22'     Positive lens element
23'     Positive lens element
24'     Negative lens element
G2B     Positive second sub-lens group
25      Positive lens element
26      Negative lens element
27      Positive lens element
25'     Negative lens element
26'     Positive lens element
S       Aperture diaphragm
I       Imaging plane

**Claims**

1.  A zoom lens system comprising:-

   a negative first lens group (G1) and a positive second lens group (G2) in that order from the object side;

wherein during zooming from the short focal length extremity to the long focal length extremity, the distance between said first lens group and said second lens group decreases;

wherein said second lens group (G2) comprises a positive first sub-lens group (G2A), an aperture diaphragm (S), and a positive second sub-lens group (G2B) in that order from the object side;

wherein said first sub-lens group (G2A) comprises one or two positive lens elements (21, 21', 22'), and a cemented lens having a positive lens element (22, 23') and a negative lens element (23, 24');

**characterised in that**

said second sub-lens group (G2B) is consisting of one or two positive lens elements (25, 26' 27), and one negative lens element which are uncemented and satisfy the following condition:-

$$0.65 < f2A/f2B < 1.0 \quad ... \quad (1)$$

wherein f2A designates the focal length of said first sub-lens group (G2A), and
f2B designates the focal length of said second sub-lens group (G2B).

2. A zoom lens system according to claim 1, wherein the following condition (2) is satisfied:-

$$0.5 < RP/FP < 1.5 \quad ... \quad (2)$$

wherein FP designates the combined focal length of the first lens group (G1) and the first sub-lens group (G2A) at the short focal length extremity; and
wherein RP designates the focal length of the second sub-lens group (G2B) at the short focal length extremity.

3. A zoom lens system according to claim 1 or 2 wherein said first lens group comprises an aspherical surface lens element, wherein the following condition (3) is satisfied:-

$$1.6 < fasp/f1 < 5.0 \quad ... \quad (3)$$

wherein fasp designates the focal length of said aspherical surface lens element (12), and
f1 designates the focal length of said first lens group (G1) .

4. A zoom lens system according to claim 3 wherein the following condition (4) is satisfied:-

$$Avd > 52.5 \quad ... \quad (4)$$

wherein Avd designates the Abbe number at the d-line of said aspherical surface lens element (12).

5. A zoom lens system according to any preceding claim wherein the following condition (5) is satisfied:-

$$-0.92 < f1/f2 < -0.8 \quad ... \quad (5)$$

wherein f1 designates the focal length of said first lens group (G1), and
wherein f2 designates the focal length of said second lens group (G2).

**Patentansprüche**

1. Ein Zoomobjektivsystem, umfassend:-

Eine negative erste Objektivgruppe (Gl) und eine positive zweite Objektivgruppe (G2), in der Reihenfolge von der Objektseite;

wobei, während des Zoomens aus dem kurzen Brennweitenende zum langen Brennweitenende, der Abstand zwischen der besagten ersten Objektivgruppe und der besagten zweiten Objektivgruppe abnimmt;

wobei besagte zweite Objektivgruppe (G2) eine positive erste Objektivgruppe (G2A), eine Aperturblende (S) und eine positive zweite Linsenuntergruppe (G2B), in dieser Reihenfolge von der Objektseite, umfasst;

wobei besagte erste Linsenuntergruppe (G2A) ein oder zwei positive Objektivelemente (21, 21', 22') und eine zementierte Linse mit einem positiven Objektivelement (22, 23') und einem negativen Objektivelement (23, 24') umfasst;

**dadurch gekennzeichnet, dass**

besagte zweite Linsenuntergruppe (G2B) aus einem oder zwei positiven Objektivelementen (25, 26,' 27) und einem negativen Objektivelement besteht, die nicht zementiert sind und die folgende Bedingung erfüllen:-

$$0,65 < \ f2A/f2B < \ 1,0 \ (1)$$

wobei 2A die Brennweite der ersten Linsenuntergruppe (G2A) bezeichnet und
f2B die Brennweite der zweiten Linsenuntergruppe (G2B) bezeichnet.

2. Ein Zoomobjektivsystem nach Anspruch 1, wobei die folgende Bedingung (2) erfüllt ist:-

$$0,5 </< 1,5 \ (2)$$

wobei FP die kombinierte Brennweite der ersten Objektivgruppe (GI) und die erste Linsenuntergruppe (G2A) am kurzen Brennweitenende bezeichnet; und
wobei RP die Brennweite der zweiten Linsenuntergruppe (G2B) am kurzen Brennweitenende bezeichnet.

3. Ein Zoomobjektivsystem nach Anspruch 1 oder 2, wobei die erste Objektivgruppe ein Objektivelement mit asphärischer Oberfläche umfasst, wobei die folgende Bedingung (3) erfüllt ist:-

$$1,6 < fasp/f1 \ < 5,0 \ \ (3)$$

wobei fasp die Brennweite des Objektivelements mit asphärischer Oberfläche (12) bezeichnet und
f1 die Brennweite der ersten Objektivgruppe (GI) bezeichnet.

4. Ein Zoomobjektivsystem nach Anspruch 3, wobei die folgende Bedingung (4) erfüllt ist:-

$$Avd > 52,5 \ \ \ (4)$$

wobei Avd die Abbe-Zahl an der D-Linie des besagten Objektivelements mit asphärischer Oberfläche (12) bezeichnet.

5. Ein Zoomobjektivsystem nach einem der vorhergehenden Ansprüche, wobei die folgende Bedingung (5) erfüllt ist:-

$$-0,92 <f1/f2 < -0,8 \ \ \ (5)$$

wobei f1 die Brennweite der ersten Objektivgruppe (GI) bezeichnet, und
wobei f2 die Brennweite der zweiten Objektivgruppe (G2) bezeichnet.

**Revendications**

1. Système de lentilles de zoom comprenant :

un premier groupe de lentilles négatif (G1) et un second groupe de lentilles positives (G2) dans cet ordre à partir du côté objet ;

dans lequel pendant le zoom à partir de l'extrémité à courte longueur focale à l'extrémité à longue longueur focale, la distance entre ledit premier groupe de lentilles et ledit second groupe de lentilles diminue ;

dans lequel ledit second groupe de lentilles (G2) comprend un premier groupe de sous-lentilles positives (G2A), un diaphragme d'ouverture (S) et un second groupe de sous-lentilles positives (G2B) dans cet ordre à partir du côté objet ;

dans lequel ledit premier groupe de sous-lentilles (G2A) comprend un ou deux éléments de lentille positive (21, 21', 22), et une lentille collée présentant un élément de lentille positive (22, 23') et un élément de lentille négative (23, 24') ;

**caractérisé en ce que**

ledit second groupe de sous-lentilles (G2B) est constitué d'un ou deux éléments de lentille positive (25, 26,' 27) et un élément de lentille négative qui sont non collés et satisfont à la condition suivante :

$$0,65 < f2A/f2B < 1,0 \quad (1)$$

dans lequel f2A désigne la longueur focale dudit premier groupe de sous-lentilles (G2A) et
f2B désigne la longueur focale dudit second groupe de sous-lentilles (G2B).

2. Système de lentilles de zoom selon la revendication 1, dans lequel la condition suivante (2) est satisfaite :

$$0,5 < RP/FP < 1,5 \quad (2)$$

dans lequel FP désigne la longueur focale combinée du premier groupe de lentilles (G1) et du premier groupe de sous-lentilles (G2A) à l'extrémité à courte longueur focale ; et
dans lequel, RP désigne la longueur focale du second groupe de sous-lentilles (G2B) à l'extrémité à courte longueur focale.

3. Système de lentilles de zoom selon la revendication 1 ou 2, dans lequel ledit premier groupe de lentilles comprend un élément de lentille à surface asphérique, dans lequel la condition suivante (3) est satisfaite :

$$1,6 < fasp/f1 < 5,0 \quad (3)$$

dans lequel fasp désigne la longueur focale dudit élément de lentille à surface asphérique (12), et
f1 désigne la longueur focale dudit premier groupe de lentilles (GL).

4. Système de lentilles de zoom selon la revendication 3, dans lequel la condition suivante (4) est satisfaite :

$$Avd > 52,5 \quad (4)$$

dans lequel Avd désigne le nombre d'Abbe sur la ligne d dudit élément de lentille à surface asphérique (12).

5. Système de lentilles de zoom selon une quelconque revendication précédente, dans lequel la condition suivante (5) est satisfaite :

$$-0,92 < f1/f2 < -0,8 \quad (5)$$

dans lequel f1 désigne la longueur focale dudit premier groupe de lentilles (G1) et
dans lequel f2 désigne la longueur focale dudit second groupe de lentilles (G2).

# Fig. 1

EP 3 015 896 B1

# Fig. 2

| FNO. =1 : 4. 0 | Y=14. 24 | Y=14. 24 | Y=14. 24 |

—— d Line
------- g Line
— — — C Line

—— S
— — M

| -0.2    0.2 | -0.05    0.05 | -0.2    0.2 | -5.0    5.0  % |

SPHERICAL
ABERRATION
CHROMATIC
ABERRATION

LATERAL
CHROMATIC
ABERRATION

ASTIGMATISM

DISTORTION

# Fig. 3

Y= 0.00    +0.10

−0.10

Y= 10.00    +0.10

−0.10

Y= 3.00    +0.10

−0.10

Y= 11.85    +0.10

−0.10

Y= 6.00    +0.10

−0.10

Y= 12.82    +0.10

−0.10

Y= 7.90    +0.10

−0.10

Y= 14.24    +0.10

−0.10

—— d Line

Fig. 4

# Fig. 5

| FNO. =1 : 2. 9 | Y=14. 24 | Y=14. 24 | Y=14. 24 |

—— d Line
········ g Line
– – – – C Line

—— S
– – M

| -0.2    0.2 | -0.05    0.05 | -0.2    0.2 | -5.0    5.0  % |

| SPHERICAL ABERRATION CHROMATIC ABERRATION | LATERAL CHROMATIC ABERRATION | ASTIGMATISM | DISTORTION |

# Fig. 6

Y= 0.00    +0.10    -0.10

Y= 10.00    +0.10    -0.10

Y= 3.00    +0.10    -0.10

Y= 11.85    +0.10    -0.10

Y= 6.00    +0.10    -0.10

Y= 12.82    +0.10    -0.10

Y= 7.90    +0.10    -0.10

Y= 14.24    +0.10    -0.10

—— d Line

EP 3 015 896 B1

# Fig. 7

# Fig. 8

| FNO. =1 : 4. 0 | Y=14. 24 | Y=14. 24 | Y=14. 24 |
|---|---|---|---|

——— d Line
------- g Line
－ － － C Line

——— S
－ － M

-0.2　　0.2

-0.05　　0.05

-0.2　　0.2

-5.0　　5.0 %

SPHERICAL
ABERRATION
CHROMATIC
ABERRATION

LATERAL
CHROMATIC
ABERRATION

ASTIGMATISM

DISTORTION

# Fig. 9

Y= 0.00　　+0.10　　-0.10

Y= 3.00　　+0.10　　-0.10

Y= 6.00　　+0.10　　-0.10

Y= 7.90　　+0.10　　-0.10

Y= 10.00　　+0.10　　-0.10

Y= 11.85　　+0.10　　-0.10

Y= 12.82　　+0.10　　-0.10

Y= 14.24　　+0.10　　-0.10

——— d Line

26

Fig. 10

# Fig. 11

| FNO. =1 : 2. 9 | Y=14. 24 | Y=14. 24 | Y=14. 24 |
|---|---|---|---|

—— d Line
------- g Line
— — C Line

—— S
— — M

-0.2　　0.2
SPHERICAL
ABERRATION
CHROMATIC
ABERRATION

-0.05　　0.05
LATERAL
CHROMATIC
ABERRATION

-0.2　　0.2
ASTIGMATISM

-5.0　　5.0　%
DISTORTION

# Fig. 12

Y= 0.00 　+0.10　　-0.10

Y= 10.00　+0.10　　-0.10

Y= 3.00 　+0.10　　-0.10

Y= 11.85　+0.10　　-0.10

Y= 6.00 　+0.10　　-0.10

Y= 12.82　+0.10　　-0.10

Y= 7.90 　+0.10　　-0.10

Y= 14.24　+0.10　　-0.10

—— d Line

# Fig. 13

EP 3 015 896 B1

# Fig. 14

FNO. =1:4. 0     Y=14. 24     Y=14. 24     Y=14. 24

——— d Line
-------- g Line
----- C Line

——— S
-- M

-0.2   0.2     -0.05   0.05     -0.2   0.2     -5.0   5.0 %

SPHERICAL
ABERRATION
CHROMATIC
ABERRATION

LATERAL
CHROMATIC
ABERRATION

ASTIGMATISM

DISTORTION

# Fig. 15

Y= 0.00   +0.10 / -0.10

Y= 3.00   +0.10 / -0.10

Y= 6.00   +0.10 / -0.10

Y= 7.90   +0.10 / -0.10

Y= 10.00   +0.10 / -0.10

Y= 11.85   +0.10 / -0.10

Y= 12.82   +0.10 / -0.10

Y= 14.24   +0.10 / -0.10

——— d Line

# Fig. 16

EP 3 015 896 B1

# Fig. 17

FNO. =1 : 2. 9          Y=14. 24          Y=14. 24          Y=14. 24

——— d Line
------- g Line
– – – C Line

—— S
– – M

-0.2    0.2          -0.05    0.05          -0.2    0.2          -5.0    5.0  %

SPHERICAL          LATERAL          ASTIGMATISM          DISTORTION
ABERRATION         CHROMATIC
CHROMATIC          ABERRATION
ABERRATION

# Fig. 18

Y= 0.00      +0.10          Y= 10.00      +0.10
             -0.10                        -0.10

Y= 3.00      +0.10          Y= 11.85      +0.10
             -0.10                        -0.10

Y= 6.00      +0.10          Y= 12.82      +0.10
             -0.10                        -0.10

Y= 7.90      +0.10          Y= 14.24      +0.10          ——— d Line
             -0.10                        -0.10

# Fig. 19

EP 3 015 896 B1

# Fig. 20

FNO. =1 : 4. 0    Y=14. 24    Y=14. 24    Y=14. 24

——— d Line
········· g Line
———— C Line

——— S
— — M

-0.2    0.2    -0.05    0.05    -0.2    0.2    -5.0    5.0 %

SPHERICAL
ABERRATION
CHROMATIC
ABERRATION

LATERAL
CHROMATIC
ABERRATION

ASTIGMATISM

DISTORTION

# Fig. 21

Y= 0.00    +0.10
           -0.10

Y= 10.00    +0.10
            -0.10

Y= 3.00    +0.10
           -0.10

Y= 11.85    +0.10
            -0.10

Y= 6.00    +0.10
           -0.10

Y= 12.82    +0.10
            -0.10

Y= 7.90    +0.10
           -0.10

Y= 14.24    +0.10
            -0.10

——— d Line

# Fig. 22

EP 3 015 896 B1

# Fig. 23

| FNO. =1:2.9 | Y=14.24 | Y=14.24 | Y=14.24 |
|---|---|---|---|

—— d Line
········· g Line
– – – – C Line

—— S
– – M

| -0.2    0.2 | -0.05    0.05 | -0.2    0.2 | -5.0    5.0 % |
|---|---|---|---|
| SPHERICAL ABERRATION CHROMATIC ABERRATION | LATERAL CHROMATIC ABERRATION | ASTIGMATISM | DISTORTION |

# Fig. 24

Y= 0.00    +0.10    -0.10

Y= 10.00    +0.10    -0.10

Y= 3.00    +0.10    -0.10

Y= 11.85    +0.10    -0.10

Y= 6.00    +0.10    -0.10

Y= 12.82    +0.10    -0.10

Y= 7.90    +0.10    -0.10

Y= 14.24    +0.10    -0.10

—— d Line

Fig. 25

# Fig. 26

FNO. =1 : 4. 0       Y=14. 24       Y=14. 24       Y=14. 24

—— d Line
------- g Line
—— — C Line

—— S
— — M

-0.2   0.2     -0.05   0.05     -0.2   0.2     -5.0   5.0   %

SPHERICAL       LATERAL        ASTIGMATISM     DISTORTION
ABERRATION     CHROMATIC
CHROMATIC      ABERRATION
ABERRATION

# Fig. 27

Y= 0.00     +0.10           Y= 10.00     +0.10

             -0.10                        -0.10

Y= 3.00     +0.10           Y= 11.85     +0.10

             -0.10                        -0.10

Y= 6.00     +0.10           Y= 14.24     +0.10

             -0.10                        -0.10

Y= 7.90     +0.10           Y= 14.70     +0.10         —— d Line

             -0.10                        -0.10

Fig. 28

# Fig. 29

FNO. =1:2.9      Y=14.24      Y=14.24      Y=14.24

——— d Line
------- g Line
– – – C Line

——— S
– – M

-0.2   0.2     -0.05   0.05     -0.2   0.2     -5.0   5.0 %

SPHERICAL      LATERAL      ASTIGMATISM      DISTORTION
ABERRATION     CHROMATIC
CHROMATIC      ABERRATION
ABERRATION

# Fig. 30

Y= 0.00    +0.10        Y= 10.00    +0.10

-0.10            -0.10

Y= 3.00    +0.10        Y= 11.85    +0.10

-0.10            -0.10

Y= 6.00    +0.10        Y= 14.24    +0.10

-0.10            -0.10

Y= 7.90    +0.10        Y= 14.70    +0.10      ——— d Line

-0.10            -0.10

40

Fig. 31

# Fig. 32

| FNO. =1:4.0 | Y=14.24 | Y=14.24 | Y=14.24 |

——— d Line
------- g Line
— — — C Line

——— S
— — M

-0.2   0.2        -0.05   0.05        -0.2   0.2        -5.0   5.0  %

SPHERICAL
ABERRATION
CHROMATIC
ABERRATION

LATERAL
CHROMATIC
ABERRATION

ASTIGMATISM

DISTORTION

# Fig. 33

Y= 0.00    +0.10          Y= 10.00    +0.10
           -0.10                      -0.10

Y= 3.00    +0.10          Y= 11.85    +0.10
           -0.10                      -0.10

Y= 6.00    +0.10          Y= 14.24    +0.10
           -0.10                      -0.10

Y= 7.90    +0.10          Y= 14.70    +0.10        ——— d Line
           -0.10                      -0.10

# Fig. 34

EP 3 015 896 B1

EP 3 015 896 B1

# Fig. 35

FNO. =1 : 2. 9 | Y=14. 24 | Y=14. 24 | Y=14. 24

— d Line
------- g Line
---- C Line

— S
-- M

-0.2  0.2 | -0.05  0.05 | -0.2  0.2 | -5.0  5.0 %

SPHERICAL ABERRATION CHROMATIC ABERRATION

LATERAL CHROMATIC ABERRATION

ASTIGMATISM

DISTORTION

# Fig. 36

Y= 0.00   +0.10 / -0.10

Y= 3.00   +0.10 / -0.10

Y= 6.00   +0.10 / -0.10

Y= 7.90   +0.10 / -0.10

Y= 10.00   +0.10 / -0.10

Y= 11.85   +0.10 / -0.10

Y= 14.24   +0.10 / -0.10

Y= 14.70   +0.10 / -0.10

— d Line

44

EP 3 015 896 B1

# Fig. 37

# Fig. 38

FNO. =1 : 4. 0        Y=14. 24        Y=14. 24        Y=14. 24

—— d Line
------- g Line
---- C Line

—— S
-- M

-0.2   0.2      -0.05   0.05      -0.2   0.2      -5.0   5.0  %

SPHERICAL      LATERAL        ASTIGMATISM     DISTORTION
ABERRATION     CHROMATIC
CHROMATIC      ABERRATION
ABERRATION

# Fig. 39

Y= 0.00    +0.10          Y= 10.00    +0.10
             -0.10                   -0.10

Y= 3.00    +0.10          Y= 11.85    +0.10
             -0.10                   -0.10

Y= 6.00    +0.10          Y= 14.24    +0.10
             -0.10                   -0.10

Y= 7.90    +0.10          Y= 14.70    +0.10     —— d Line
             -0.10                   -0.10

Fig. 40

# Fig. 41

FNO. =1:2.9

Y=14.24

Y=14.24

Y=14.24

——— d Line
------- g Line
— — C Line

— S
— — M

-0.2    0.2

-0.05    0.05

-0.2    0.2

-5.0    5.0 %

SPHERICAL
ABERRATION
CHROMATIC
ABERRATION

LATERAL
CHROMATIC
ABERRATION

ASTIGMATISM

DISTORTION

# Fig. 42

Y= 0.00    +0.10
           -0.10

Y= 10.00    +0.10
            -0.10

Y= 3.00    +0.10
           -0.10

Y= 11.85    +0.10
            -0.10

Y= 6.00    +0.10
           -0.10

Y= 14.24    +0.10
            -0.10

Y= 7.90    +0.10
           -0.10

Y= 14.70    +0.10
            -0.10

——— d Line

# Fig. 43

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010128145 A
- JP 4654506 B
- JP H0588084 B
- US 20060007559 A